(19) Europäisches Patentamt / European Patent Office / Office européen des brevets

(11) **EP 4 455 103 A1**

(12) **EUROPEAN PATENT APPLICATION**
published in accordance with Art. 153(4) EPC

(43) Date of publication:
**30.10.2024 Bulletin 2024/44**

(21) Application number: **22910501.0**

(22) Date of filing: **27.09.2022**

(51) International Patent Classification (IPC):
**C03C 10/12** $^{(2006.01)}$

(52) Cooperative Patent Classification (CPC):
**C03C 10/00**

(86) International application number:
**PCT/JP2022/035916**

(87) International publication number:
**WO 2023/119775 (29.06.2023 Gazette 2023/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2021 JP 2021207992**

(71) Applicant: **Nippon Electric Glass Co., Ltd.
Otsu-shi, Shiga 520-8639 (JP)**

(72) Inventor: **YOKOTA, Yuki
Otsu-shi Shiga 520-8639 (JP)**

(74) Representative: **Tetzner, Michael
Tetzner & Partner mbB
Patent- und Rechtsanwälte
Van-Gogh-Strasse 3
81479 München (DE)**

(54) **LI2O-AL2O3-SIO2-SYSTEM CRYSTALLIZED GLASS**

(57) Provided is a $Li_2O$-$Al_2O_3$-$SiO_2$-based crystallized glass having a low thermal expansibility and a high transmittancy as before while having a less content of $Li_2O$ than before. A $Li_2O$-$Al_2O_3$-$SiO_2$-based crystallized glass contains, in terms of % by mass, 60 to 80% $SiO_2$, 15 to 30% $Al_2O_3$, 2.45 to 3.64% $Li_2O$, 0 to less than 0.7% $Na_2O$+$K_2O$, more than 0% to less than 1% $CaO$+$SrO$+$BaO$, and 0 to 2.4% $MgO$+$ZnO$.

**Description**

[Technical Field]

The present invention relates to $Li_2O$-$Al_2O_3$-$SiO_2$-based crystallized glasses.

[Background Art]

Conventionally, a $Li_2O$-$Al_2O_3$-$SiO_2$-based crystallized glass is used as a material for front windows of oil stoves, wood stoves and the like, substrates for high-technology products, such as color filter substrates and image sensor substrates, setters for firing electronic components, light diffuser plates, furnace core tubes for producing semiconductors, masks for producing semiconductors, optical lenses, dimension measurement members, communication members, construction members, chemical reaction containers, electromagnetic cooker top plates, heat-resistant plates and utensils, heat-resistant covers, fire door windows, members for astrometric telescopes, and members for space optics. For example, Patent Literatures 1 to 3 disclose $Li_2O$-$Al_2O_3$-$SiO_2$-based crystallized glasses in which $Li_2O$-$Al_2O_3$-$SiO_2$-based crystals, such as a $\beta$-quartz solid solution ($Li_2O \cdot Al_2O_3 \cdot nSiO_2$ [where $2 \leq n \leq 4$]) or a $\beta$-spodumene solid solution ($Li_2O \cdot Al_2O_3 \cdot nSiO_2$ [where $n \geq 4$]) are precipitated as a major crystalline phase.

$Li_2O$-$Al_2O_3$-$SiO_2$-based crystallized glasses have a low coefficient of thermal expansion and high mechanical strength and therefore have excellent thermal properties. In addition, the type of crystals to be precipitated therein can be controlled by appropriately adjusting heat treatment conditions in a crystallization process and, therefore, a high-transmittancy crystallized glass (in which a $\beta$-quartz solid solution precipitates) can be easily produced.

Meanwhile, demands for lithium-containing batteries have recently been expanded for mobile devices, such as a smartphone, in-vehicle applications, and others. Therefore, lithium raw materials have been increasingly demanded in various industries worldwide, leading to concerns about cost increases in lithium-containing products. The above-described $Li_2O$-$Al_2O_3$-$SiO_2$-based crystallized glasses are no exception and a $Li_2O$-$Al_2O_3$-$SiO_2$-based crystallized glass having a less content of $Li_2O$ than before is being needed in order to provide quality products to meet demands.

[Citation List]

[Patent Literature]

[PTL 1]
JP-B-S39-21049
[PTL 2]
JP-B-S40-20182
[PTL 3]
JP-A-H01-308845

[Summary of Invention]

[Technical Problem]

An object of the present invention is to provide a $Li_2O$-$Al_2O_3$-$SiO_2$-based crystallized glass having a low thermal expansibility and a high transmittancy as before while having a less content of $Li_2O$ than before.

[Solution to Problem]

A $Li_2O$-$Al_2O_3$-$SiO_2$-based crystallized glass can be a zero thermal expansion material, but, in order to attain zero thermal expansion, the crystallized glass needs to contain negatively thermally expandable crystals. The negatively thermally expandable crystals are $Li_2O$-$Al_2O_3$-$SiO_2$-based crystals. The reason why the $Li_2O$-$Al_2O_3$-$SiO_2$-based crystals exhibit a negative thermal expansion characteristic is that when the temperature changes, sites in the crystals where Li ions are present change. Therefore, $Li_2O$ is essential in principle to obtain a low thermal expansion characteristic of a $Li_2O$-$Al_2O_3$-$SiO_2$-based crystallized glass and it is no easy task to make the content of $Li_2O$ in the $Li_2O$-$Al_2O_3$-$SiO_2$-based crystallized glass less than before.

The inventor conducted intensive studies and, as a result, found that suitable control over the contents of various components, such as alkali metal oxides or alkaline earth metal oxides, in a $Li_2O$-$Al_2O_3$-$SiO_2$-based crystallized

glass enables production of a $Li_2O$-$Al_2O_3$-$SiO_2$-based crystallized glass having a less content of $Li_2O$ than before and having properties as before or improved over before.

A $Li_2O$-$Al_2O_3$-$SiO_2$-based crystallized glass according to the present invention contains, in terms of % by mass, 60 to 80% $SiO_2$, 15 to 30% $Al_2O_3$, 2.45 to 3.64% $Li_2O$, 0 to less than 0.7% $Na_2O$+$K_2O$, more than 0% to less than 1% $CaO$+$SrO$+$BaO$, and 0 to 2.4% $MgO$+$ZnO$. As used herein, the term "$Na_2O$+$K_2O$" refers to the total content of $Na_2O$ and $K_2O$, the term "$CaO$+$SrO$+$BaO$" refers to the total content of $CaO$, $SrO$, and $BaO$, and the term "$MgO$+$ZnO$" refers to the total content of $MgO$ and $ZnO$.

The $Li_2O$-$Al_2O_3$-$SiO_2$-based crystallized glass according to the present invention preferably contains, in terms of % by mass, more than 0% $HfO_2$.

The $Li_2O$-$Al_2O_3$-$SiO_2$-based crystallized glass according to the present invention preferably contains, in terms of % by mass, more than 0% $MoO_3$.

The $Li_2O$-$Al_2O_3$-$SiO_2$-based crystallized glass according to the present invention preferably contains, in terms of % by mass, 30 ppm or less Pt and 30 ppm or less Rh.

The $Li_2O$-$Al_2O_3$-$SiO_2$-based crystallized glass according to the present invention preferably has a $\beta$-OH value of 2/mm or less.

The $Li_2O$-$Al_2O_3$-$SiO_2$-based crystallized glass according to the present invention preferably contains, in terms of % by mass, 2 to 4% $ZrO_2$ and 0 to 1.24% $SnO_2$.

The $Li_2O$-$Al_2O_3$-$SiO_2$-based crystallized glass according to the present invention preferably contains, in terms of % by mass, 0.42 to 5% $P_2O_5$.

The $Li_2O$-$Al_2O_3$-$SiO_2$-based crystallized glass according to the present invention preferably has a coefficient of thermal expansion of -15 to 15 $\times$ $10^{-7}$/°C at 30 to 750°C.

[Advantageous Effects of Invention]

The present invention enables provision of a $Li_2O$-$Al_2O_3$-$SiO_2$-based crystallized glass having a low thermal expansibility and a high transmittancy as before while having a less content of $Li_2O$ than before.

[Description of Embodiments]

A $Li_2O$-$Al_2O_3$-$SiO_2$-based crystallized glass according to the present invention contains, in terms of % by mass, 60 to 80% $SiO_2$, 15 to 30% $Al_2O_3$, 2.45 to 3.64% $Li_2O$, 0 to less than 0.7% $Na_2O$+$K_2O$, more than 0% to less than 1% $CaO$+$SrO$+$BaO$, and 0 to 2.4% $MgO$+$ZnO$. Reasons why the contents of the components are limited as just described will be described below. In the following description of the respective contents of components, "%" refers to "% by mass" unless otherwise stated.

$SiO_2$ is a component that forms part of a glass network and also constitutes part of a $Li_2O$-$Al_2O_3$-$SiO_2$-based crystal. The content of $SiO_2$ is 60 to 80%, preferably 61 to 78%, 62 to 76%, 63 to 74%, 64 to 72%, 64 to 70%, 64 to 69.5%, or 64 to 69%, and particularly preferably 64 to 68.5%. If the content of $SiO_2$ is too small, the coefficient of thermal expansion tends to increase and, therefore, a crystallized glass having excellent thermal shock resistance is less likely to be obtained. In addition, the chemical durability tends to decrease. On the other hand, if the content of $SiO_2$ is too large, the meltability of glass decreases and the viscosity of glass melt increases, so that the glass becomes difficult to clarify and difficult to form into shape, which makes it likely that the productivity decreases. In addition, the time required for crystallization becomes long and, therefore, the productivity is likely to decrease.

$Al_2O_3$ is a component that forms part of a glass network and also constitutes part of a $Li_2O$-$Al_2O_3$-$SiO_2$-based crystal. In addition, $Al_2O_3$ is a component that is located around a crystal nucleus and forms a core-shell structure. Because of the presence of a core-shell structure, a crystal nucleus component is less likely to be supplied from the outside of the shell, so that the crystal nuclei are less likely to become enlarged and a large number of fine crystal nuclei are likely to be formed. The content of $Al_2O_3$ is 15 to 30%, preferably 17 to 30%, 19 to 28%, 20 to 27%, 20 to 26.5%, 20 to 26%, 20 to 25%, 20 to 24%, 20.5 to 24%, 21 to 24%, or 21 to 23.5%, and particularly preferably 21 to 23%. If the content of $Al_2O_3$ is too small, the coefficient of thermal expansion tends to increase and, therefore, a crystallized glass having excellent thermal shock resistance is less likely to be obtained. In addition, the chemical durability tends to decrease. Furthermore, the crystal nuclei become large and, therefore, the crystallized glass easily becomes clouded. On the other hand, if the content of $Al_2O_3$ is too large, the meltability of glass decreases and the viscosity of glass melt increases, so that the glass becomes difficult to clarify and difficult to form into shape, which makes it likely that the productivity decreases. Furthermore, mullite crystals tend to precipitate to devitrify the glass and the crystallized glass becomes susceptible to breakage.

$Li_2O$ is a constituent of a $Li_2O$-$Al_2O_3$-$SiO_2$-based crystal, and a component that largely influences the crystallinity and reduces the viscosity of glass to increase the meltability and formability of the glass. The content of $Li_2O$ is 2.45 to 3.64%, preferably 2.5 to 3.63%, 2.55 to 3.62%, 2.6 to 3.61%, 2.65 to 3.6%, 2.7 to 3.59%, 2.75 to 3.58%, 2.8 to 3.57%, or 2.85 to 3.56%, and particularly preferably 2.9 to 3.55%. If the content of Li2O is too small, mullite crystals tend to precipitate to devitrify the glass. In addition, in crystallizing the glass, $Li_2O$-$Al_2O_3$-$SiO_2$-based crystals are less likely to precipitate and, therefore, a crystallized glass having excellent thermal shock resistance is difficult to obtain. Furthermore, the meltability of glass decreases and the viscosity of glass melt increases, so that the glass becomes difficult to clarify and difficult to form into shape, which makes it likely that the productivity decreases. On the other hand, if the content of $Li_2O$ is too large, the crystallinity is excessively high, so that the glass tends to be likely to devitrify and the crystallized glass becomes susceptible to breakage. In addition, the raw material cost becomes excessively high.

$SiO_2$, $Al_2O_3$, and $Li_2O$ are main components of a β-quartz solid solution serving as a major crystalline phase and $Li_2O$ and $Al_2O_3$ compensate each other for their charges and thus are incorporated into a $SiO_2$ skeleton to form a solid solution. When these three components are contained at a suitable ratio in the glass, crystallization efficiently progresses and, therefore, a crystallized glass can be produced at low cost. The ratio $(SiO_2+Al_2O_3)/Li_2O$ is, in terms of mass ratio, preferably 20 or more, 20.2 or more, 20.4 or more, 20.6 or more, or 20.8 or more, and particularly preferably 21 or more. The term "$(SiO_2+Al_2O_3)/Li_2O$" used herein refers to the value of the total content of $SiO_2$ and $Al_2O_3$ divided by the content of $Li_2O$. The upper limit of $(SiO_2+Al_2O_3)/Li_2O$ is not particularly limited, but is actually not more than 50.

$Na_2O$ is a component that can be incorporated into $Li_2O$-$Al_2O_3$-$SiO_2$-based crystals to form a solid solution together, and a component that largely influences the crystallinity and reduces the viscosity of glass to increase the meltability and formability of the glass. Furthermore, $Na_2O$ is also a component for controlling the coefficient of thermal expansion and refractive index of crystallized glass. The content of $Na_2O$ is preferably 0 to less than 0.7%, 0 to 0.69%, 0 to 0.68%, 0 to 0.67%, 0 to 0.66%, 0 to 0.65%, 0 to 0.64%, 0 to 0.63%, 0 to 0.62%, 0 to 0.61%, 0 to 0.6%, 0 to 0.59%, 0 to 0.58%, 0 to 0.57%, 0 to 0.56%, 0 to 0.55%, 0 to 0.54%, 0 to 0.53%, 0 to 0.52%, 0 to 0.51%, 0 to 0.5%, 0 to 0.49%, 0 to 0.48%, 0 to 0.47%, 0 to 0.46%, 0 to 0.45%, 0 to 0.44%, 0 to 0.43%, 0 to 0.42%, or 0 to 0.41%, and particularly preferably 0 to 0.4%. If the content of $Na_2O$ is too large, the crystallinity is excessively high, so that the glass is likely to devitrify and the crystallized glass becomes susceptible to breakage. Furthermore, the ionic radius of a Na cation is greater than those of a Li cation, a Mg cation, and so on being constituents of the major crystalline phase, and, therefore, Na cations are less likely to be incorporated into the crystals, so that Na cations after crystallization are likely to remain in the remaining glass (glass matrix). For this reason, if the content of $Na_2O$ is too large, a difference in refractive index between the crystalline phase and the remaining glass phase is likely to occur and, therefore, the crystallized glass tends to easily become clouded. However, $Na_2O$ is likely to be mixed as impurities into the glass. Therefore, if complete removal of $Na_2O$ is pursued, the raw material batch tends to be expensive to increase the production cost. In order to reduce the increase in production cost, the lower limit of the content of $Na_2O$ is preferably not less than 0.0003%, more preferably not less than 0.0005%, and particularly preferably not less than 0.001%.

$K_2O$ is a component that can be incorporated into $Li_2O$-$Al_2O_3$-$SiO_2$-based crystals to form a solid solution together, and a component that largely influences the crystallinity and reduces the viscosity of glass to increase the meltability and formability of the glass. Furthermore, $K_2O$ is also a component for controlling the coefficient of thermal expansion and refractive index of crystallized glass. The content of $K_2O$ is preferably 0 to less than 0.7%, 0 to 0.69%, 0 to 0.68%, 0 to 0.67%, 0 to 0.66%, 0 to 0.65%, 0 to 0.64%, 0 to 0.63%, 0 to 0.62%, 0 to 0.61%, 0 to 0.6%, 0 to 0.59%, 0 to 0.58%, 0 to 0.57%, 0 to 0.56%, 0 to 0.55%, 0 to 0.54%, 0 to 0.53%, 0 to 0.52%, 0 to 0.51%, 0 to 0.5%, 0 to 0.49%, 0 to 0.48%, 0 to 0.47%, 0 to 0.46%, 0 to 0.45%, 0 to 0.44%, 0 to 0.43%, 0 to 0.42%, or 0 to 0.41%, and particularly preferably 0 to 0.4%. If the content of $K_2O$ is too large, the crystallinity is excessively high, so that the glass is likely to devitrify and the crystallized glass becomes susceptible to breakage. Furthermore, the ionic radius of a K cation is greater than those of a Li cation, a Mg cation, and so on being constituents of the major crystalline phase, and, therefore, K cations are less likely to be incorporated into the crystals, so that K cations after crystallization are likely to remain in the remaining glass. For this reason, if the content of $K_2O$ is too large, a difference in refractive index between the crystalline phase and the remaining glass phase is likely to occur and, therefore, the crystallized glass tends to easily become clouded. However, $K_2O$ is likely to be mixed as impurities into the glass. Therefore, if complete removal of $K_2O$ is pursued, the raw material batch tends to be expensive to increase the production cost. In order to reduce the increase in production cost, the lower limit of the content of $K_2O$ is preferably not less than 0.0003%, more preferably not less than 0.0005%, and particularly preferably not less than 0.001%.

Although $Na_2O$ and $K_2O$ are components that increase the meltability and formability of glass, if the contents of these components are too large, the coefficient of thermal expansion becomes excessively large and, as a result, the thermal resistance of $Li_2O$-$Al_2O_3$-$SiO_2$-based crystallized glass deteriorates. Therefore, $Na_2O$+$K_2O$ should be suitably controlled. The content of $Na_2O$+$K_2O$ is preferably 0 to less than 0.7%, 0 to 0.69%, 0 to 0.68%, 0 to 0.67%, 0 to 0.66%, 0 to 0.65%, 0 to 0.64%, 0 to 0.63%, 0 to 0.62%, 0 to 0.61%, 0 to 0.6%, 0 to 0.59%, 0 to 0.58%, 0 to 0.57%, 0 to 0.56%, 0 to 0.55%, 0 to 0.54%, 0 to 0.53%, 0 to 0.52%, 0 to 0.51%, 0 to 0.5%, 0 to 0.49%, 0 to 0.48%, 0 to 0.47%, 0 to 0.46%, 0 to 0.45%, 0 to 0.44%, 0 to 0.43%, 0 to 0.42%, or 0 to 0.41%, and particularly preferably 0 to 0.4%. However, $Na_2O$ and $K_2O$ are likely to be mixed as impurities into the glass. Therefore, if complete removal of these components is pursued, the raw material batch tends to be expensive to increase the production cost. In order to reduce the increase in production cost, the lower limit of $Na_2O$+$K_2O$ is preferably not less than 0.0003%, more preferably not less than 0.0005%, and particularly preferably not less than 0.001%.

CaO is a component that reduces the viscosity of glass to increase the meltability and formability of the glass. Furthermore, CaO is also a component for controlling the coefficient of thermal expansion and refractive index of crystallized glass. The content of CaO is preferably 0 to less than 1%, 0 to 0.95%, 0 to 0.9%, 0 to 0.85%, 0 to 0.8%, 0 to 0.75%, 0 to 0.7%, 0 to 0.65%, 0 to 0.6%, 0 to 0.55%, 0 to 0.54%, 0 to 0.53%, 0 to 0.52%, 0 to 0.51%, 0 to 0.5%, 0 to 0.49%, 0 to 0.48%, 0 to 0.47%, 0 to 0.46%, 0 to 0.45%, 0 to 0.44%, 0 to 0.43%, 0 to 0.42%, or 0 to 0.41%, and particularly preferably 0 to 0.4%. If the content of CaO is too large, the glass is likely to devitrify and the crystallized glass becomes susceptible to breakage. Furthermore, the ionic radius of a Ca cation is greater than those of a Li cation, a Mg cation, and so on being constituents of the major crystalline phase, and, therefore, Ca cations are less likely to be incorporated into the crystals, so that Ca cations after crystallization are likely to remain in the remaining glass. For this reason, if the content of CaO is too large, a difference in refractive index between the crystalline phase and the remaining glass phase is likely to occur and, therefore, the crystallized glass tends to easily become clouded. However, CaO is likely to be mixed as impurities into the glass. Therefore, if complete removal of CaO is pursued, the raw material batch tends to be expensive to increase the production cost. In order to reduce the increase in production cost, the lower limit of the content of CaO is preferably not less than 0.0001%, more preferably not less than 0.0003%, and particularly preferably not less than 0.0005%.

SrO is a component that reduces the viscosity of glass to increase the meltability and formability of the glass. Furthermore, SrO is also a component for controlling the coefficient of thermal expansion and refractive index of crystallized glass. The content of SrO is preferably 0 to less than 1%, 0 to 0.95%, 0 to 0.9%, 0 to 0.85%, 0 to 0.8%, 0 to 0.75%, 0 to 0.7%, 0 to 0.65%, 0 to 0.6%, 0 to 0.55%, 0 to 0.54%, 0 to 0.53%, 0 to 0.52%, 0 to 0.51%, 0 to 0.5%, 0 to 0.49%, 0 to 0.48%, 0 to 0.47%, 0 to 0.46%, 0 to 0.45%, 0 to 0.44%, 0 to 0.43%, 0 to 0.42%, or 0 to 0.41%, and particularly preferably 0 to 0.4%. If the content of SrO is too large, the glass is likely to devitrify and the crystallized glass becomes susceptible to breakage. Furthermore, the ionic radius of a Sr cation is greater than those of a Li cation, a Mg cation, and so on being constituents of the major crystalline phase, and, therefore, Sr cations are less likely to be incorporated into the crystals, so that Sr cations after crystallization are likely to remain in the remaining glass. For this reason, if the content of SrO is too large, a difference in refractive index between the crystalline phase and the remaining glass phase is likely to occur and, therefore, the crystallized glass tends to easily become clouded. However, SrO is likely to be mixed as impurities into the glass. Therefore, if complete removal of SrO is pursued, the raw material batch tends to be expensive to increase the production cost. In order to reduce the increase in production cost, the lower limit of the content of SrO is preferably not less than 0.0001%, more preferably not less than 0.0003%, and particularly preferably not less than 0.0005%.

BaO is a component that reduces the viscosity of glass to increase the meltability and formability of the glass. Furthermore, BaO is also a component for controlling the coefficient of thermal expansion and refractive index of crystallized glass. The content of BaO is preferably 0 to less than 1%, 0 to 0.95%, 0 to 0.9%, 0 to 0.85%, 0 to 0.8%, 0 to 0.75%, 0 to 0.7%, 0 to 0.65%, 0 to 0.6%, 0 to 0.55%, 0 to 0.54%, 0 to 0.53%, 0 to 0.52%, 0 to 0.51%, 0 to 0.5%, 0 to 0.49%, 0 to 0.48%, 0 to 0.47%, 0 to 0.46%, 0 to 0.45%, 0 to 0.44%, 0 to 0.43%, 0 to 0.42%, or 0 to 0.41%, and particularly preferably 0 to 0.4%. If the content of BaO is too large, crystals containing Ba precipitate to make the glass devitrifiable and make the crystallized glass susceptible to breakage. Furthermore, the ionic radius of a Ba cation is greater than those of a Li cation, a Mg cation, and so on being constituents of the major crystalline phase, and, therefore, Ba cations are less likely to be incorporated into the crystals, so that Ba cations after crystallization are likely to remain in the remaining glass. For this reason, if the content of BaO is too large, a difference in refractive index between the crystalline phase and the remaining glass phase is likely to occur and, therefore, the crystallized glass tends to easily become clouded. However, BaO is likely to be mixed as impurities into the glass. Therefore, if complete removal of BaO is pursued, the raw material batch tends to be expensive to increase the production cost. In order to reduce the increase in production cost, the lower limit of the content of BaO is preferably not less than 0.0001%, more preferably not less than 0.0003%, and particularly preferably not less than 0.0005%.

Although CaO, SrO, and BaO are components that increase the meltability and formability of glass, if the contents of these components are too large, the coefficient of thermal expansion becomes excessively large and, as a result, the thermal resistance of $Li_2O$-$Al_2O_3$-$SiO_2$-based crystallized glass deteriorates. Therefore, CaO+SrO+BaO should be suitably controlled. The content of CaO+SrO+BaO is preferably more than 0 to less than 1%, more than 0 to 0.95%, more than 0 to 0.9%, more than 0 to 0.85%, more than 0 to 0.8%, more than 0 to 0.75%, more than 0 to 0.7%, more than 0 to 0.65%, more than 0 to 0.6%, more than 0 to 0.55%, more than 0 to 0.54%, more than 0 to 0.53%, more than 0 to 0.52%, more than 0 to 0.51%, more than 0 to 0.5%, more than 0 to 0.49%, more than 0 to 0.48%, more than 0 to 0.47%, more than 0 to 0.46%, more than 0 to 0.45%, more than 0 to 0.44%, more than 0 to 0.43%, more than 0 to 0.42%, or more than 0 to 0.41%, and particularly preferably more than 0 to 0.4% . However, CaO, SrO, and BaO are likely to be mixed as impurities into the glass. Therefore, if complete removal of these components is pursued, the raw material batch tends to be expensive to increase the production cost. In order to reduce the increase in production cost, the lower limit of CaO+SrO+BaO is preferably 0.0001%, more preferably not less than 0.0003%, and particularly preferably not less than 0.0005%.

MgO is a component that can be incorporated into Li₂O-Al₂O₃-SiO₂-based crystals to form a solid solution together and increases the coefficient of thermal expansion of the Li₂O-Al₂O₃-SiO₂-based crystals . The content of MgO is preferably 0 to 2,4%, 0 to 2.35%, 0 to 2.3%, 0 to 2.25%, 0 to 2.2%, 0 to 2.15%, 0 to 2.1%, 0 to 2.05%, 0 to 2%, more than 0 to 2%, 0.05 to 2%, 0.1 to 2%, 0.15 to 2%, 0.2 to 2%, 0.25 to 2%, 0.3 to 2%, 0.35 to 2%, 0.4 to 2%, 0.45 to 2%, 0.5 to 2%, 0.5 to 1.95%, 0.5 to 1.9%, 0.5 to 1.85%, 0.5 to 1.8%, 0.5 to 1.75%, 0.5 to 1.7%, 0.5 to 1.65%, 0.5 to 1.6%, or 0.5 to 1.55%, and particularly preferably 0.5 to 1.5%. If the content of MgO is too large, the crystallinity becomes excessively high to make the glass devitrifiable and make the crystallized glass susceptible to breakage. Furthermore, the coefficient of thermal expansion tends to be excessively high.

ZnO is a component that can be incorporated into Li₂O-Al₂O₃-SiO₂-based crystals to form a solid solution together and largely influences the crystallinity. Furthermore, ZnO is also a component for controlling the coefficient of thermal expansion and refractive index of crystallized glass. The content of ZnO is preferably 0 to 2,4%, 0 to 2.35%, 0 to 2.3%, 0 to 2.25%, 0 to 2.2%, 0 to 2.15%, 0 to 2.1%, 0 to 2.05%, 0 to 2%, more than 0 to 2%, 0.05 to 2%, 0.1 to 2%, 0.15 to 2%, 0.2 to 2%, 0.25 to 2%, 0.3 to 2%, 0.35 to 2%, 0.4 to 2%, 0.45 to 2%, 0.5 to 2%, 0.5 to 1.95%, 0.5 to 1.9%, 0.5 to 1.85%, 0.5 to 1.8%, 0.5 to 1.75%, 0.5 to 1.7%, 0.5 to 1.65%, 0.5 to 1.6%, or 0.5 to 1.55%, and particularly preferably 0.5 to 1.5%. If the content of ZnO is too large, the crystallinity becomes excessively high to make the glass devitrifiable and susceptible to breakage.

MgO and ZnO are components that can be incorporated into Li₂O-Al₂O₃-SiO₂-based crystals to form a solid solution together and largely influences the crystallinity. Furthermore, MgO and ZnO are also components for controlling the coefficient of thermal expansion and refractive index of crystallized glass. However, if the contents of these components are too large, the coefficient of thermal expansion becomes excessively large and, as a result, the thermal resistance of Li₂O-Al₂O₃-SiO₂-based crystallized glass deteriorates. Therefore, MgO+ZnO should be suitably controlled. The content of MgO+ZnO is preferably 0 to 2,4%, 0 to 2.35%, 0 to 2.3%, 0 to 2.25%, 0 to 2.2%, 0 to 2.15%, 0 to 2.1%, 0 to 2.05%, 0 to 2%, more than 0 to 2%, 0.05 to 2%, 0.1 to 2%, 0.15 to 2%, 0.2 to 2%, 0.25 to 2%, 0.3 to 2%, 0.35 to 2%, 0.4 to 2%, 0.45 to 2%, 0.5 to 2%, 0.5 to 1.95%, 0.5 to 1.9%, 0.5 to 1.85%, 0.5 to 1.8%, 0.5 to 1.75%, 0.5 to 1.7%, 0.5 to 1.65%, 0.5 to 1.6%, or 0.5 to 1.55%, and particularly preferably 0.5 to 1.5%.

In Li₂O-Al₂O₃-SiO₂-based crystallized glass, Li cations, Mg cations, and Zn cations are components easily dissolved in a β-quartz solid solution and are incorporated into the crystals by charge compensation for Al cations to form part of the solid solution. Specifically, these cations are thought to dissolve in the crystals in the form of $Si^{4+} \Leftrightarrow Al^{3+} + (Li^+, 1/2 \times Mg^{2+}, 1/2 \times Zn^{2+})$ and the ratio of Al cations to Li cations, Mg cations, and Zn cations has an effect on the stability of the β-quartz solid solution. In order to stably obtain a Li₂O-Al₂O₃-SiO₂-based crystallized glass and bring the Li₂O-Al₂O₃-SiO₂-based crystallized glass close to a clear and colorless, and zero-expansion crystallized glass, the ratio Al₂O₃/{Li₂O+1/2×(MgO+ZnO) } is, in terms of mass ratio, preferably 3 to 8, 3 to 7.8, 3 to 7.6, 3 to 7.4, 3 to 7.2, 3 to 7, 3 to 6.8, 3.1 to 6.8, 3.2 to 6.8, 3.3 to 6.8, 3.4 to 6.8, 3.5 to 6.8, 3.6 to 6.8, 3.7 to 6.8, 3.8 to 6.8, or 3.9 to 6.8, and particularly preferably 4 to 6.8. The term "Al₂O₃/{Li₂O+1/2×(MgO+ZnO)}" used herein refers to the value of the content of Al₂O₃ divided by the sum of the content of Li₂O and the value of the total content of MgO and ZnO divided by 2.

The Li₂O-Al₂O₃-SiO₂-based crystallized glass according to the present invention may contain, in addition to the above components, the following components in its glass composition.

HfO₂ is a component that increases the Young's modulus, modulus of rigidity, and so on of glass and also a component that decreases the viscosity of glass to increase the meltability and formability of the glass. Therefore, for example, if it is desired to increase the strength of the Li₂O-Al₂O₃-SiO₂-based crystallized glass according to the present invention, the content of HfO₂ is preferably more than 0%, 0.0001% or more, 0.0002% or more, 0.0003% or more, 0.0004% or more, 0.0005% or more, 0.0006% or more, 0.0007% or more, 0.0008% or more, 0.0009% or more, 0.001% or more, 0.0011% or more, 0.0012% or more, 0.0013% or more, 0.0014% or more, 0.0015% or more, 0.0016% or more, 0.0017% or more, 0.0018% or more, 0.0019% or more, 0. 002% or more, 0.0021% or more, 0.0022% or more, 0.0023% or more, 0.0024% or more, 0.0025% or more, 0.0026% or more, 0.0027% or more, 0.0028% or more, 0.0029% or more, 0.003% or more, 0.0031% or more, 0.0032% or more, 0.0033% or more, or 0.0034% or more, and particularly preferably 0.0035% or more. If the content of HfO₂ is too small, the strength of glass decreases and, therefore, the glass becomes susceptible to breakage. In addition, the meltability of glass decreases and the viscosity of glass melt increases, so that the glass becomes difficult to clarify and difficult to form into shape, which makes it likely that the productivity decreases. If the content of HfO₂ is too large, the strength of glass becomes excessively high and, therefore, processing and so on of the glass become difficult. Furthermore, the raw material for HfO₂ is expensive, leading to an increase in production cost. Therefore, the upper limit of the content of HfO₂ is preferably not more than 20%.

MoO₃ is a component that promotes crystallization. Therefore, for example, if it is desired to efficiently perform crystallization of the Li₂O-Al₂O₃-SiO₂-based crystallized glass according to the present invention, the content of MoO₃ is preferably more than 0%, 0.0001% or more, 0.0002% or more, 0.0003% or more, 0.0004% or more, 0.0005% or more, 0.0006% or more, 0.0007% or more, 0.0008% or more, 0.0009% or more, 0.001% or more, 0.0011% or more, 0.0012% or more, 0.0013% or more, 0.0014% or more, 0.0015% or more, 0.0016% or more, 0.0017% or more, 0.0018% or more, 0.0019% or more, 0.002% or more, 0.0021% or more, 0.0022% or more, 0.0023% or more, 0.0024% or more, 0.0025% or more, 0.0026% or more, 0.0027% or more, 0.0028% or more, 0.0029% or more, 0.003% or more, 0.0031% or more, 0.0032% or more, 0.0033% or more, or 0.0034% or more, and particularly preferably 0.0035% or more. If the content of $MoO_2$ is too large, the $Li_2O$-$Al_2O_3$-$SiO_2$-based crystallized glass according to the present invention is likely to have a yellowish or other tint and may be less likely to obtain a desired transmittancy. In addition, devitrification containing Mo is likely to occur and the production cost increases. Therefore, the upper limit of the content of $MoO_3$ is preferably not more than 5%.

Pt is a component that can be incorporated in a state of ions, colloid, metal or so on into glass and causes the glass to develop a yellowish to ginger tint. Furthermore, this tendency is significant after crystallization. In addition, intensive studies have shown that the incorporation of Pt may have an effect on the nucleation and crystallizing behavior of crystallized glass to make the crystallized glass easily clouded. Therefore, the content of Pt is preferably 30 ppm or less, 25 ppm or less, 20 ppm or less, 16 ppm or less, 12 ppm or less, 10 ppm or less, 9 ppm or less, 8 ppm or less, 7 ppm or less, 6 ppm or less, 5 ppm or less, 4 ppm or less, 3 ppm or less, 2 ppm or less, 1.6 ppm or less, 1.4 ppm or less, 1.2 ppm or less, 1 ppm or less, 0.9 ppm or less, 0.8 ppm or less, 0.7 ppm or less, 0.6 ppm or less, 0.5 ppm or less, 0.45 ppm or less, 0.4 ppm or less, or 0.35 ppm or less, and particularly preferably 0.3 ppm or less. Although the incorporation of Pt should be avoided as much as possible, there may be a case where, with the use of general melting facilities, Pt members need to be used in order to obtain a homogeneous glass. Therefore, if complete removal of Pt is pursued, the production cost tends to increase. In the absence of any adverse effect in terms of tinting, in order to reduce the increase in production cost, the lower limit of the content of Pt is preferably not less than 0.0001 ppm, not less than 0.001 ppm, not less than 0.005 ppm, not less than 0.01 ppm, not less than 0.02 ppm, not less than 0.03 ppm, not less than 0.04 ppm, not less than 0.05 ppm, or not less than 0.06 ppm, and particularly preferably not less than 0.07 ppm. Furthermore, so long as the tinting is permitted, Pt may be used as a nucleating agent for promoting the precipitation of the major crystalline phase, as with $ZrO_2$ or $TiO_2$. In doing so, Pt may be used alone as a nucleating agent or used as a nucleating agent in combination with another or other components. In using Pt as a nucleating agent, its form (colloid, metallic crystals or so on) is not particularly limited.

Rh is a component that can be incorporated in a state of ions, colloid, metal or so on into glass and tends to cause the glass to develop a yellowish to ginger tint and make crystallized glass clouded, like Pt. Therefore, the content of Rh is preferably 30 ppm or less, 25 ppm or less, 20 ppm or less, 16 ppm or less, 12 ppm or less, 10 ppm or less, 9 ppm or less, 8 ppm or less, 7 ppm or less, 6 ppm or less, 5 ppm or less, 4 ppm or less, 3 ppm or less, 2 ppm or less, 1.6 ppm or less, 1.4 ppm or less, 1.2 ppm or less, 1 ppm or less, 0.9 ppm or less, 0.8 ppm or less, 0.7 ppm or less, 0.6 ppm or less, 0.5 ppm or less, 0.45 ppm or less, 0.4 ppm or less, or 0.35 ppm or less, and particularly preferably 0.3 ppm or less. Although the incorporation of Rh should be avoided as much as possible, there may be a case where, with the use of general melting facilities, Rh members need to be used in order to obtain a homogeneous glass. Therefore, if complete removal of Rh is pursued, the production cost tends to increase. In the absence of any adverse effect in terms of tinting, in order to reduce the increase in production cost, the lower limit of the content of Rh is preferably not less than 0.0001 ppm, not less than 0.001 ppm, not less than 0.005 ppm, not less than 0.01 ppm, not less than 0.02 ppm, not less than 0.03 ppm, not less than 0.04 ppm, not less than 0.05 ppm, or not less than 0.06 ppm, and particularly preferably not less than 0.07 ppm. Furthermore, so long as the tinting is permitted, Rh may be used as a nucleating agent, as with $ZrO_2$ or $TiO_2$. In doing so, Rh may be used alone as a nucleating agent or used as a nucleating agent in combination with another or other components. In using Rh as a nucleating agent that promotes precipitation of a major crystalline phase, its form (colloid, metallic crystals or so on) is not particularly limited.

Furthermore, Pt+Rh is preferably 30 ppm or less, 25 ppm or less, 20 ppm or less, 16 ppm or less, 12 ppm or less, 10 ppm or less, 9 ppm or less, 8 ppm or less, 7 ppm or less, 6 ppm or less, 5 ppm or less, 4.75 ppm or less, 4.5 ppm or less, 4.25 ppm or less, 4 ppm or less, 3.75 ppm or less, 3.5 ppm or less, 3.25 ppm or less, 3 ppm or less, 2.75 ppm or less, 2.5 ppm or less, 2.25 ppm or less, 2 ppm or less, 1.75 ppm or less, 1.5 ppm or less, 1.25 ppm or less, 1 ppm or less, 0.95 ppm or less, 0.9 ppm or less, 0.85 ppm or less, 0.8 ppm or less, 0.75 ppm or less, 0.7 ppm or less, 0.65 ppm or less, 0.6 ppm or less, 0.55 ppm or less, 0.5 ppm or less, 0.45 ppm or less, 0.4 ppm or less, or 0.35 ppm or less, and particularly preferably 0.3 ppm or less. Although the incorporation of Pt and Rh should be avoided as much as possible, there may be a case where, with the use of general melting facilities, Pt members and Rh members need to be used in order to obtain a homogeneous glass. Therefore, if complete removal of Pt and Rh is pursued, the production cost tends to increase. In the absence of any adverse effect in terms of tinting, in order to reduce the increase in production cost, the lower limit of the content of Pt+Rh is preferably not less than 0.0001 ppm, not less than 0.001 ppm, not less than 0.005 ppm, not less than 0.01 ppm, not less than 0.02 ppm, not less than 0.03 ppm, not less than 0.04 ppm, not less than 0.05 ppm, or not less than 0.06 ppm, and particularly preferably not less than 0.07 ppm.

$ZrO_2$ is a nucleating component for precipitating crystals in the crystallization process. The content of $ZrO_2$ is preferably 2 to 4%, 2.05 to 4%, 2.1 to 4%, 2.15 to 4%, 2.2 to 4%, 2.25 to 4%, 2.3 to 4%, 2.4 to 3.95%, 2.5 to 3.9%, 2.6 to 3.8 5%, 2.7 to 3.8%, more than 2.7 to 3.8%, 2.8 to 3.8%, or 2.9 to 3.8%, and particularly preferably 3 to 3.8%. If the content of $ZrO_2$ is too small, the crystal nuclei may not be formed well and, thus, coarse crystals may precipitate to make crystallized glass clouded and subject to breakage. On the other hand, if the content of $ZrO_2$ is too large, coarse $ZrO_2$ crystals precipitate to make the glass devitrifiable and make the crystallized glass susceptible to breakage.

Although $Li_2O$, $Na_2O$, and $K_2O$ are components that increase the meltability and formability of glass, if the contents of these components are too large, the low-temperature viscosity excessively decreases and, thus, the glass may excessively flow during crystallization. Furthermore, $Li_2O$, $Na_2O$, and $K_2O$ are components that may deteriorate the weather resistance, water resistance, chemical resistance, and so on of glass before crystallization. If the glass before crystallization is deteriorated by moisture or so on, a desired crystallization behavior and, as a result, desired properties may not be obtained. On the other hand, $ZrO_2$ is a component that functions as a nucleating agent and has the effect of preferentially crystallizing in an initial stage of crystallization to reduce the flow of the remaining glass. Furthermore, $ZrO_2$ has the effect of efficiently filling voids of a glass network principally involving a $SiO_2$ skeleton to block the diffusion of protons, various chemical components, and so on in the glass network, thus increasing the weather resistance, water resistance, chemical resistance, and so on of glass before crystallization. In order to obtain a crystallized glass having a desired shape and desired properties, $(Li_2O+Na_2O+K_2O)/ZrO_2$ should be suitably controlled. The ratio $(Li_2O+Na_2O+K_2O)/ZrO_2$ is, in terms of mass ratio, preferably 2 or less, 1.98 or less, 1.96 or less, 1.94 or less, or 1.92 or less, and particularly preferably 1.9 or less. The term " $(Li_2O+Na_2O+K_2O)/ZrO_2$" used herein refers to the value of the total content of $Li_2O$, $Na_2O$, and $K_2O$ divided by the content of $ZrO_2$.

$SnO_2$ is a component acting as a fining agent. Furthermore, $SnO_2$ is also a component necessary for efficiently precipitating crystals in the crystallization process. On the other hand, $SnO_2$ is also a component that, if much contained in glass, significantly intensifies the tinting of the glass. The content of $SnO_2$ is preferably 0 to 1.24%, 0 to 1.23%, 0 to 1.22%, 0 to 1.21%, 0 to 1.2%, more than 0 to 1.2%, 0.0001 to 1.2%, 0.0005 to 1.2%, 0.001 to 1.2%, 0.005 to 1.2%, 0.01 to 1.2%, 0.02 to 1.2%, 0.03 to 1.2%, 0.04 to 1.2%, 0.05 to 1.2%, 0.06 to 1.2%, 0.07 to 1.2%, 0.08 to 1.2%, 0.09 to 1.2%, 0.1 to 1.2%, 0.11 to 1.2%, 0.12 to 1.2%, 0.13 to 1.2%, or 0.14 to 1.2%, and particularly preferably 0.15 to 1.2%. If the content of $SnO_2$ is too large, the tinting of crystallized glass may increase. Furthermore, the amount of $SnO_2$ evaporated during melting tends to increase to increase the environmental burden.

$TiO_2$ is a nucleating component for precipitating crystals in the crystallization process. On the other hand, if $TiO_2$ is much contained in glass, it significantly intensifies the tinting of the glass. Particularly, zirconia titanate-based crystals containing $ZrO_2$ and $TiO_2$ act as crystal nuclei, but electrons transition from the valence band of oxygen serving as a ligand to the conduction bands of zirconia and titanium serving as central metals (LMCT transition), which involves the tinting of crystallized glass. Furthermore, if titanium remains in the remaining glass phase, LMCT transition may occur from the valence band of the $SiO_2$ skeleton to the conduction band of tetravalent titanium in the remaining glass phase. In addition, d-d transition occurs in trivalent titanium in the remaining glass phase, which involves the tinting of the crystallized glass. In the case where titanium and iron coexist, tinting like ilmenite ($FeTiO_3$) develops. In another case, it is known that the coexistence of titanium and tin intensifies the yellowish tint of glass. Therefore, the content of $TiO_2$ is preferably 0 to 5%, 0 to 4.5%, 0 to 4%, 0 to 3.5%, 0 to 3%, 0 to 2.8%, 0 to 2.6%, 0 to 2.4%, 0 to 2.2%, or 0 to 2.1%, and particularly preferably 0 to 2%. However, $TiO_2$ is likely to be mixed as impurities into the glass. Therefore, if complete removal of $TiO_2$ is pursued, the raw material batch tends to be expensive to increase the production cost. In order to reduce the increase in production cost, the lower limit of the content of $TiO_2$ is preferably not less than 0.0003%, not less than 0.0005%, not less than 0.001%, not less than 0.005%, or not less than 0.01%, and particularly preferably not less than 0.02%.

$TiO_2$ and $ZrO_2$ are components that can each function as a crystal nucleus. Ti and Zr are congeners and are similar in electronegativity and ionic radius. Therefore, these elements are likely to take similar molecular conformations as oxides and the coexistence of $TiO_2$ and $ZrO_2$ is known to facilitate the occurrence of phase separation in the initial stage of crystallization. Hence, within a permissible range of tinting, $TiO_2/ZrO_2$ is preferably 0.0001 to 5, 0.0001 to 4, 0.0001 to 3, 0.0001 to 2.5, 0.0001 to 2, 0.0001 to 1.5, 0.0001 to 1, 0.0001 to 0.5, or 0.0001 to 0.4, and particularly preferably 0.0001 to 0.3. If $TiO_2/ZrO_2$ is too small, the raw material batch tends to be expensive to increase the production cost. On the other hand, if $TiO_2/ZrO_2$ is too large, the rate of crystal nucleation becomes low and, therefore, the production cost may increase. The term "$TiO_2/ZrO_2$" used herein refers to the value of the content of $TiO_2$ divided by the content of $ZrO_2$.

$SnO_2$ has the effect of facilitating phase separation in glass. In order to efficiently cause phase separation to expedite nucleation and crystal growth in later processes while keeping the liquidus temperature low (reducing the risk of devitrification due to precipitation of a primary phase), the ratio $SnO_2/(SnO_2+ZrO_2)$ is, in terms of mass ratio, preferably 0.01 to 0.99, 0.01 to 0.98, 0.01 to 0.94, 0.01 to 0.9, 0.01 to 0.86, 0.01 to 0.82, 0.01 to 0.78, 0.01 to 0.74, 0.01 to 0.7, or 0.03 to 0.7, and particularly preferably 0.05 to 0.7. The term "$SnO_2/(SnO_2+ZrO_2)$" used herein refers to the value of the content of $SnO_2$ divided by the total content of $SnO_2$ and $ZrO_2$.

Furthermore, $SnO_2$ causes a reaction of $SnO_2$ -> $SnO + 1/2O_2$ at high temperatures to emit $O_2$ gas into glass melt. This reaction is known as a clarification mechanism of $SnO_2$ and the $O_2$ gas emitted during the reaction has not only a "defoaming action" to expand fine bubbles present in the glass melt and release them to the outside of the glass system, but also a "stirring action" to mix the glass melt. In the $Li_2O$-$Al_2O_3$-$SiO_2$-based crystallized glass according to the present invention, the contents of $SiO_2$ and $Al_2O_3$ account for over half of the composition and these components are hardly soluble. Therefore, in order to efficiently form a homogeneous glass melt, the three components need to be contained at a suitable ratio in glass. The ratio $(SiO_2+Al_2O_3)/SnO_2$ is, in terms of mass ratio, preferably 44 or more, 44.3 or more, 44.7 or more, 45 or more, 45.2 or more, 45.4 or more, 45.6 or more, or 45.8 or more, and particularly preferably 46 or more. The term "$(SiO_2+Al_2O_3)/SnO_2$" used herein refers to the value of the total content of $SiO_2$ and $Al_2O_3$ divided by the content of $SnO_2$.

The ratio $Al_2O_3/(SnO_2+ZrO_2)$ is, in terms of mass ratio, preferably 7.1 or less, 7.05 or less, 7 or less, 6.95 or less, 6.9 or less, 6.85 or less, 6.8 or less, 6.75 or less, 6.7 or less, 6.65 or less, 6.6 or less, 6.55 or less, 6.5 or less, 6.45 or less, 6.4 or less, 6.35 or less, 6.3 or less, 6.25 or less, 6.2 or less, 6.15 or less, 6.1 or less, 6.05 or less, 6 or less, 5.98 or less, 5.95 or less, 5.92 or less, 5.9 or less, 5.8 or less, 5.7 or less, or 5.6 or less, and particularly preferably 5.5 or less. If $Al_2O_3/(SnO_2+ZrO_2)$ is too large, nucleation does not efficiently progress, which makes efficient crystallization difficult. On the other hand, if $Al_2O_3/(SnO_2+ZrO_2)$ is too small, crystal nuclei become large and, thus, crystallized glass easily becomes clouded. Therefore, the lower limit of $Al_2O_3/(SnO_2+ZrO_2)$ is preferably not less than 0.01. The term "$Al_2O_3/(SnO_2+ZrO_2)$" used herein refers to the value of the content of $Al_2O_3$ divided by the total content of $SnO_2$ and $ZrO_2$.

$P_2O_5$ is a component that suppresses the precipitation of coarse $ZrO_2$ crystals. The content of $P_2O_5$ is preferably 0 to 10%, 0 to 8%, 0 to 6%, 0 to 5%, 0.02 to 5%, 0.05 to 5%, 0.08 to 5%, 0.1 to 5%, 0.13 to 5%, 0.17 to 5%, 0.2 to 5%, 0.23 to 5%, 0.27 to 5%, 0.3 to 5%, 0.33 to 5%, 0.37 to 5%, 0.4 to 5%, 0.42 to 5%, 0.42 to 4.5%, 0.42 to 4%, 0.42 to 3.5%, 0.42 to 3%, 0.42 to 2.5%, 0.42 to 2.2%, 0.42 to 2%, 0.42 to 1.8%, or 0.42 to 1.6%, and particularly preferably 0.42 to 1.5%. If the content of $P_2O_5$ is too large, the amount of $Li_2O$-$Al_2O_3$-$SiO_2$-based crystals precipitated becomes small and the coefficient of thermal expansion tends to increase.

$Y_2O_3$ is a component that reduces the viscosity of glass to increase the meltability and formability of the glass. Furthermore, $Y_2O_3$ is also a component for increasing the Young's modulus of crystallized glass and controlling the coefficient of thermal expansion and refractive index of the crystallized glass. The content of $Y_2O_3$ is preferably 0 to 10%, 0 to 8%, 0 to 6%, 0 to 5%, 0 to 4.5%, 0 to 4%, 0 to 3.5%, 0 to 3%, 0 to 2.7%, 0 to 2.4%, 0 to 2.1%, 0 to 1.8%, or 0 to 1.5%, and particularly preferably 0 to 1%. If the content of $Y_2O_3$ is too large, crystals containing Y precipitate to make the glass devitrifiable and make the crystallized glass susceptible to breakage. Furthermore, the ionic radius of a Y cation is greater than those of a Li cation, a Mg cation, and so on being constituents of the major crystalline phase and, therefore, Y cations are less likely to be incorporated into the crystals, so that Y cations after crystallization are likely to remain in the remaining glass. For this reason, if the content of $Y_2O_3$ is too large, a difference in refractive index between the crystalline phase and the remaining glass phase is likely to occur and, therefore, the crystallized glass tends to easily become clouded. However, $Y_2O_3$ may be mixed as impurities into the glass. Therefore, if complete removal of $Y_2O_3$ is pursued, the raw material batch tends to be expensive to increase the production cost. In order to reduce the increase in production cost, the lower limit of the content of $Y_2O_3$ is preferably not less than 0.0001%, more preferably not less than 0.0003%, and particularly preferably not less than 0.0005%.

$B_2O_3$ is a component that reduces the viscosity of glass to increase the meltability and formability of the glass. Furthermore, $B_2O_3$ is also a component that can be involved in the likelihood of phase separation during crystal nucleation. The content of $B_2O_3$ is preferably 0 to 10%, 0 to 8%, 0 to 6%, 0 to 5%, 0 to 4.5%, 0 to 4%, 0 to 3.5%, 0 to 3%, 0 to 2.7%, 0 to 2.4%, 0 to 2.1%, or 0 to 1.8%, and particularly preferably 0 to 1.5%. If the content of $B_2O_3$ is too large, the amount of $B_2O_3$ evaporated during melting becomes large and, thus, the environmental burden increases . However, $B_2O_3$ is likely to be mixed as impurities into the glass. Therefore, if complete removal of $B_2O_3$ is pursued, the raw material batch tends to be expensive to increase the production cost. In order to reduce the increase in production cost, the lower limit of the content of $B_2O_3$ is preferably not less than 0.0001%, more preferably not less than 0.0003%, and particularly preferably not less than 0.0005%.

It is known that, in $Li_2O$-$Al_2O_3$-$SiO_2$-based crystallized glasses, phase separated regions are formed in glass before crystal nucleation and, then, crystal nuclei made of $TiO_2$, $ZrO_2$ and so on are formed in the phase separated regions. Because $SnO_2$, $ZrO_2$, $P_2O_5$, $TiO_2$, and $B_2O_3$ are strongly involved in the formation of phase separation, $SnO_2+ZrO_2+P_2O_5+TiO_2+B_2O_3$ is preferably 1.5 to 30%, 1.5 to 26%, 1.5 to 22%, 1.5 to 20%, 1.6 to 18%, 1.7 to 16%, 1.8 to 15%, 2.1 to 15%, 2.4 to 15%, 2.5 to 15%, 2.8 to 15%, 2.8 to 13%, 2.8 to 12%, 2.8 to 11%, 2.8 to 10%, 3 to 9.5%, or 3 to 9.2%, and particularly preferably 3 to 9%, and $SnO_2/(SnO_2+ZrO_2+P_2O_5+TiO_2+B_2O_3)$ is, in terms of mass ratio, preferably 0.01 or more, 0.02 or more, 0.03 or more, 0.04 or more, or 0.05 or more, and particularly preferably 0.06 or more. If $P_2O_5+B_2O_3+SnO_2+TiO_2+ZrO_2$ is too small, phase separated regions are less likely to be formed and, therefore, the glass is less likely to be crystallized. On the other hand, if $P_2O_5+B_2O_3+SnO_2+TiO_2+ZrO_2$ is too large and/or $SnO_2/(SnO_2+ZrO_2+P_2O_5+TiO_2+B_2O_3)$ is too small, phase separated regions become large and, thus, the crystallized glass easily becomes clouded. There is no particular limitation as to the upper limit of $SnO_2/(SnO_2+ZrO_2+P_2O_5+TiO_2+B_2O_3)$, but it is actually not more than 0.9. As used herein, the term "$SnO_2+ZrO_2+P_2O_5+TiO_2+B_2O_3$" refers to the total content of $SnO_2$, $ZrO_2$, $P_2O_5$, $TiO_2$, and $B_2O_3$ and the term "$SnO_2/(SnO_2+ZrO_2+P_2O_5+TiO_2+B_2O_3)$ " refers to the value of the content of $SnO_2$ divided by the total content of $SnO_2$, $ZrO_2$, $P_2O_5$, $TiO_2$, and $B_2O_3$.

$Fe_2O_3$ is a component that intensifies the tinting of glass and a component that significantly intensifies the tinting, particularly, by interactions with $TiO_2$ and $SnO_2$. The content of $Fe_2O_3$ is preferably 0.1% or less, 0.08% or less, 0.06% or less, 0.05% or less, 0.04% or less, 0.035% or less, 0.03% or less, 0.02% or less, 0.015% or less, 0.013% or less, 0.012% or less, 0.011% or less, 0.01% or less, 0.009% or less, 0.008% or less, 0.007% or less, 0.006% or less, 0.005% or less, 0.004% or less, or 0.003% or less, and particularly preferably 0.002% or less. However, $Fe_2O_3$ is likely to be mixed as impurities into the glass. Therefore, if complete removal of $Fe_2O_3$ is pursued, the raw material batch tends to be expensive to increase the production cost. In order to reduce the increase in production cost, the lower limit of the content of $Fe_2O_3$ is preferably not less than 0.0001%, not less than 0.0002%, not less than 0.0003%, or not less than 0.0005%, and particularly preferably not less than 0.001%.

In the case of coexistence of titanium and iron, tinting like ilmenite ($FeTiO_3$) may develop. Particularly, in $Li_2O$-$Al_2O_3$-$SiO_2$-based crystallized glasses, titanium and iron components unprecipitated as crystal nuclei or major crystals may remain in the remaining glass after crystallization to facilitate the development of the tinting. These components may be able to be reduced in amount in terms of composition design. However, because $TiO_2$ and $Fe_2O_3$ are likely to be mixed as impurities into the glass, if complete removal of them is pursued, the raw material batch tends to be expensive to increase the production cost. Therefore, in order to reduce the production cost, the glass may contain $TiO_2$ and $Fe_2O_3$ within the above-described ranges. In order to further reduce the production cost, the glass may contain both the components within a permissible range of tinting. In this case, $TiO_2/(TiO_2+Fe_2O_3)$ is, in terms of mass ratio, preferably 0.001 to 0.999, 0.003 to 0.997, 0.005 to 0.995, 0.007 to 0.993, 0.009 to 0.991, 0.01 to 0.99, 0.1 to 0.9, 0.15 to 0.85, 0.2 to 0.8, 0.25 to 0.75, 0.3 to 0.7, or 0.35 to 0.65, and particularly preferably 0.4 to 0.6. Thus, a crystallized glass having a high degree of clearness and colorlessness can be easily obtained inexpensively. The term "$TiO_2/(TiO_2+Fe_2O_3)$" used herein refers to the value of the content of $TiO_2$ divided by the total content of $TiO_2$ and $Fe_2O_3$.

$As_2O_3$ and $Sb_2O_3$ are highly toxic and may contaminate the environment, for example, during the production process of glass or during treatment of waste glass. Therefore, $Sb_2O_3+As_2O_3$ is preferably 2% or less, 1% or less, 0.7% or less, less than 0.7%, 0.65% or less, 0.6% or less, 0.55% or less, 0.5% or less, 0.45% or less, 0.4% or less, 0.35% or less, 0.3% or less, 0.25% or less, 0.2% or less, 0.15% or less, 0.1% or less, or 0.05% or less, and particularly preferably substantially free of them (specifically, less than 0.01% by mass) . In incorporating $As_2O_3$ and/or $Sb_2O_3$ into glass, these components may be allowed to function as an fining agent or a nucleating agent. The term "$Sb_2O_3+As_2O_3$" used herein refers to the total content of $Sb_2O_3$ and $As_2O_3$.

In the absence of any adverse effect in terms of tinting, the $Li_2O$-$Al_2O_3$-$SiO_2$-based crystallized glass according to the present invention may contain, in addition to the above components, minor components, including $N_2$, $CO_2$, CO, $H_2O$, He, Ne, Ar, and $N_2$, each up to 0.1%. Furthermore, when Ag, Au, Pd, Ir, V, Cr, Sc, Ce, Pr, Pm, Sm, Eu, Gd, Tb, Dy, Ho, Er, Tm, Yb, Lu, Ac, Th, Pa, U, and so on are deliberately incorporated into glass, the raw material cost increases and the production cost tends to increase. Meanwhile, when glass containing Ag, Au or so on is subjected to light irradiation or heat treatment, agglomerates of these components are formed and crystallization can be promoted based on these agglomerates. Moreover, Pd and so on have various catalytic actions. When glass contains these components, the glass and crystallized glass can be given specific functions. In view of the above circumstances, when being aimed at giving the function of promoting crystallization or other functions, the content of each of the above components is preferably 1% or less, 0.5% or less, or 0.3% or less, and particularly preferably 0.1% or less. Otherwise, the content of each of the above components is preferably 500 ppm or less, 300 ppm or less, or 100 ppm or less, and particularly preferably 10 ppm or less.

Furthermore, in the absence of any adverse effect in terms of tinting, the $Li_2O$-$Al_2O_3$-$SiO_2$-based crystallized glass according to the present invention may contain $SO_3$, MnO, $Cl_2$, $La_2O_3$, $WO_3$, $Ta_2O_5$, $Nd_2O_3$, $Nb_2O_5$, $RfO_2$, and so on up to 10% in total. However, the raw material batch of the above components is expensive and, thus, the production cost tends to increase. Therefore, these components may not be incorporated into glass unless the circumstances are exceptional. Particularly, $Ta_2O_5$ may become a conflict mineral. Therefore, the total content of these components is, in terms of % by mass, preferably 5% or less, 4% or less, 3% or less, 2% or less, 1% or less, 0.5% or less, 0.4% or less, 0.3% or less, 0.2% or less, 0.1% or less, 0.05% or less, less than 0.05%, 0.049% or less, 0.048% or less, 0.047% or less, or 0.046% or less, and particularly preferably 0.045% or less.

In the $Li_2O$-$Al_2O_3$-$SiO_2$-based crystallized glass according to the present invention, the β-OH value is preferably 0 to 2/mm, 0.001 to 2/mm, 0.01 to 1.5/mm, 0.02 to 1.5/mm, 0.03 to 1.2/mm, 0.04 to 1.1/mm, 0.05 to 1/mm, 0.06 to 1/mm, 0.07 to 1/mm, 0.08 to 0.9/mm, 0.08 to 0.85/mm, 0.08 to 0.8/mm, 0.08 to 0.75/mm, 0.08 to 0.7/mm, 0.08 to 0.65/mm, 0.08 to 0.6/mm, 0.08 to 0.55/mm, 0.08 to 0.54/mm, 0.08 to 0.53/mm, 0.08 to 0.52/mm, or 0.08 to 0.51/mm, and particularly preferably 0.08 to 0.5/mm. If the β-OH value is too small, the rate of crystal nucleation in the crystallization process becomes low and, therefore, the amount of crystal nuclei created is likely to become small. On the other hand, if the β-OH value is too large, bubbles are likely to be produced at the interface between a glass production furnace member made of metal containing Pt or so on or a glass production furnace member made of refractory and glass, which is likely to deteriorate the quality of a glass product. In addition, β-quartz solid solution crystals are likely to transform to β-spodumene solid solution crystals and the like and, thus, the crystal size is likely to become large. Furthermore, a difference in refractive index is likely to occur in the inside of the crystallized glass and, as a result, the crystallized glass easily becomes clouded. The $\beta$-OH value changes depending on the raw material used, the melting atmosphere, the melting temperature, the melting time, and so on and can be controlled by changing these conditions as necessary.

Taken together, a preferred composition range in implementing the $Li_2O$-$Al_2O_3$-$SiO_2$-based crystallized glass according to the present invention is 60 to 80% $SiO_2$, 15 to 30% $Al_2O_3$, 2.45 to 3.64% $Li_2O$, 0 to less than 0.7% $Na_2O+K_2O$, more than 0 to less than 1% $CaO+SrO+BaO$, 0 to 2.4% $MgO+ZnO$, and a $\beta$-OH value of 0.001 to 2/mm, preferably 60 to 80% $SiO_2$, 15 to 30% $Al_2O_3$, 2.45 to 3.64% $Li_2O$, 0 to less than 0.7% $Na_2O+K_2O$, more than 0 to less than 1% $CaO+SrO+BaO$, 0 to 2.4% $MgO+ZnO$, 0.0001% or more $HfO_2$, and a $\beta$-OH value of 0.08 to 0.75/mm, more preferably 63 to 74% $SiO_2$, 20 to 26.5% $Al_2O_3$, 2.45 to 3.64% $Li_2O$, 0 to less than 0.7% $Na_2O+K_2O$, more than 0 to less than 1% $CaO+SrO+BaO$, 0 to 2.4% $MgO+ZnO$, 0.0001% or more $HfO_2$, and a $\beta$-OH value of 0.08 to 0.75/mm, even more preferably 63 to 74% $SiO_2$, 20 to 26.5% $Al_2O_3$, 2.45 to 3.64% $Li_2O$, 0 to less than 0.7% $Na_2O+K_2O$, more than 0 to less than 1% $CaO+SrO+BaO$, 0 to 2.4% $MgO+ZnO$, 0.0001% or more $HfO_2$, 0.0001% or more $MoO_3$, and a $\beta$-OH value of 0.08 to 0.75/mm, still even more preferably 63 to 74% $SiO_2$, 20 to 26.5% $Al_2O_3$, 2.45 to 3.64% $Li_2O$, 0 to less than 0.7% $Na_2O+K_2O$, more than 0 to less than 1% $CaO+SrO+BaO$, 0 to 2.4% $MgO+ZnO$, 0.0001% or more $HfO_2$, 0.0001% or more $MoO_3$, 5 ppm or less Pt, 5 ppm or less Rh, and a $\beta$-OH value of 0.08 to 0.75/mm, yet still even more preferably 63 to 74% $SiO_2$, 20 to 26.5% $Al_2O_3$, 2.45 to 3.64% $Li_2O$, 0 to less than 0.7% $Na_2O+K_2O$, more than 0 to less than 1% $CaO+SrO+BaO$, 0 to 2.4% $MgO+ZnO$, 0.0001% or more $HfO_2$, 0.0001% or more $MoO_3$, 5 ppm or less Pt, 5 ppm or less Rh, 2.05 to 4% $ZrO_2$, 0 to 1.24% $SnO_2$, and a $\beta$-OH value of 0.08 to 0.75/mm, further preferably 63 to 74% $SiO_2$, 20 to 26.5% $Al_2O_3$, 2.45 to 3.64% $Li_2O$, 0 to less than 0.7% $Na_2O+K_2O$, more than 0 to less than 1% $CaO+SrO+BaO$, 0 to 2.4% $MgO+ZnO$, 0.0001% or more $HfO_2$, 0.0001% or more $MoO_3$, 5 ppm or less Pt, 5 ppm or less Rh, 2.05 to 4% $ZrO_2$, 0 to 1.24% $SnO_2$, 0.42 to 3% $P_2O_5$, and a $\beta$-OH value of 0.08 to 0.75/mm, and most preferably 63 to 74% $SiO_2$, 20 to 26.5% $Al_2O_3$, 2.45 to 3.64% $Li_2O$, 0 to less than 0.7% $Na_2O+K_2O$, more than 0 to less than 1% $CaO+SrO+BaO$, 0 to 2.4% $MgO+ZnO$, 0.0001% or more $HfO_2$, 0.0001% or more $MoO_3$, 5 ppm or less Pt, 5 ppm or less Rh, 2.1 to 4% $ZrO_2$, 0.1 to 1.24% $SnO_2$, 0.42 to 3% $P_2O_5$, and a $\beta$-OH value of 0.08 to 0.75/mm.

The $Li_2O$-$Al_2O_3$-$SiO_2$-based crystallized glass according to the present invention having the above-described composition can easily obtain a low thermal expansibility and a high transmittancy as before while having a less content of $Li_2O$ than before.

In the $Li_2O$-$Al_2O_3$-$SiO_2$-based crystallized glass according to the present invention, the coefficient of thermal expansion at 30 to 380°C is preferably -15 to 15 $\times$ $10^{-7}$/°C, -14 to 14 $\times$ $10^{-7}$/°C, -13 to 13 $\times$ $10^{-7}$/°C, -12 to 12 $\times$ $10^{-7}$/°C, -11 to 11 $\times$ $10^{-7}$/°C, -10 to 10 $\times$ $10^{-7}$/°C, -9 to 9 $\times$ $10^{-7}$/°C, -8 to 8 $\times$ $10^{-7}$/°C, -7 to 7 $\times$ $10^{-7}$/°C, or -6 to 6 $\times$ $10^{-7}$/°C, and particularly preferably -5 to 5 $\times$ $10^{-7}$/°C. When the dimensional stability and/or the thermal shock resistance are particularly required, the coefficient of thermal expansion is, in addition to the above ranges, preferably -4.5 to 4.5 $\times$ $10^{-7}$/°C, -4 to 4 $\times$ $10^{-7}$/°C, -3.5 to 3.5 $\times$ $10^{-7}$/°C, -3 to 3 $\times$ $10^{-7}$/°C, -2.5 to 2.5 $\times$ $10^{-7}$/°C, -2 to 2 $\times$ $10^{-7}$/°C, -1.5 to 1.5 $\times$ $10^{-7}$/°C, or -1 to 1 $\times$ $10^{-7}$/°C, and particularly preferably -0.5 to 0.5 $\times$ $10^{-7}$/°C.

In the $Li_2O$-$Al_2O_3$-$SiO_2$-based crystallized glass according to the present invention, the coefficient of thermal expansion at 30 to 750°C is preferably -15 to 15 $\times$ $10^{-7}$/°C, -14 to 14 $\times$ $10^{-7}$/°C, -13 to 13 $\times$ $10^{-7}$/°C, -12 to 12 $\times$ $10^{-7}$/°C, -11 to 11 $\times$ $10^{-7}$/°C, -10 to 10 $\times$ $10^{-7}$/°C, -9 to 9 $\times$ $10^{-7}$/°C, -8 to 8 $\times$ $10^{-7}$/°C, -7 to 7 $\times$ $10^{-7}$/°C, or -6 to 6 $\times$ $10^{-7}$/°C, and particularly preferably -5 to 5 $\times$ $10^{-7}$/°C. When the dimensional stability and/or the thermal shock resistance are particularly required, the coefficient of thermal expansion is, in addition to the above ranges, preferably -4.5 to 4.5 $\times$ $10^{-7}$/°C, -4 to 4 $\times$ $10^{-7}$/°C, -3.5 to 3.5 $\times$ $10^{-7}$/°C, -3 to 3 $\times$ $10^{-7}$/°C, -2.5 to 2.5 $\times$ $10^{-7}$/°C, -2 to 2 $\times$ $10^{-7}$/°C, -1.5 to 1.5 $\times$ $10^{-7}$/°C, or -1 to 1 $\times$ $10^{-7}$/°C, and particularly preferably -0.5 to 0.5 $\times$ $10^{-7}$/°C.

In the $Li_2O$-$Al_2O_3$-$SiO_2$-based crystallized glass according to the present invention, the transmittance at a thickness of 3 mm and a wavelength of 200 nm is preferably 0% or more, 2.5% or more, 5% or more, 10% or more, 12% or more, 14% or more, 16% or more, 18% or more, 20% or more, 22% or more, 24% or more, 26% or more, 28% or more, 30% or more, 32% or more, 34% or more, 36% or more, 38% or more, 40% or more, 40.5% or more, 41% or more, 41.5% or more, 42% or more, 42.5% or more, 43% or more, 43.5% or more, 44% or more, or 44.5% or more, and particularly preferably 45% or more. In applications requiring to transmit ultraviolet light, if the transmittance at a wavelength of 200 nm is too low, a desired transmission ability may not be able to be obtained. Particularly, with use in applications for optical cleaning using an ozone lamp, medical treatments using an excimer laser, light exposure, and so on, the higher the transmittance at a wavelength of 200 nm, the more preferred it is.

In the $Li_2O$-$Al_2O_3$-$SiO_2$-based crystallized glass according to the present invention, the transmittance at a thickness of 3 mm and a wavelength of 250 nm is preferably 0% or more, 1% or more, 2% or more, 3% or more, 4% or more, 5% or more, 6% or more, 7% or more, 8% or more, 9% or more, 10% or more, 10.5% or more, 11% or more, 11.5% or more, 12% or more, 12.5% or more, 13% or more, 13.5% or more, 14% or more, 14.5% or more, 15% or more, or 15.5% or more, and particularly preferably 16% or more. In applications requiring to transmit ultraviolet light, if the transmittance at a wavelength of 250 nm is too low, a desired transmission ability may not be able to be obtained. Particularly, with use in applications for sterilization using a low-pressure mercury lamp, processing using a YAG laser or the like, and so on, the higher the transmittance at a wavelength of 250 nm, the more preferred it is.

In the $Li_2O$-$Al_2O_3$-$SiO_2$-based crystallized glass according to the present invention, the transmittance at a thickness of 3 mm and a wavelength of 300 nm is preferably 0% or more, 2.5% or more, 5% or more, 10% or more, 12% or more, 14% or more, 16% or more, 18% or more, 20% or more, 22% or more, 24% or more, 26% or more, 28% or more, 30% or more, 32% or more, 34% or more, 36% or more, 38% or more, 40% or more, 40.5% or more, 41% or more, 41.5% or more, 42% or more, 42.5% or more, 43% or more, 43.5% or more, 44% or more, or 44.5% or more, and particularly preferably 45% or more. Particularly, with use in applications for UV hardening, adhesion, and drying (UV curing), fluorescent detection of printed matters, insect attraction, and so on, the higher the transmittance at a wavelength of 300 nm, the more preferred it is.

In the $Li_2O$-$Al_2O_3$-$SiO_2$-based crystallized glass according to the present invention, the transmittance at a thickness of 3 mm and a wavelength of 325 nm is preferably 0% or more, 2.5% or more, 5% or more, 10% or more, 12% or more, 14% or more, 16% or more, 18% or more, 20% or more, 22% or more, 24% or more, 26% or more, 28% or more, 30% or more, 32% or more, 34% or more, 36% or more, 38% or more, 40% or more, 42% or more, 44% or more, 46% or more, 48% or more, 50% or more, 52% or more, 54% or more, 56% or more, 57% or more, 58% or more, 59% or more, 60% or more, 61% or more, 62% or more, 63% or more, or 64% or more, and particularly preferably 65% or more. Particularly, with use in applications for UV hardening, adhesion, and drying (UV curing), fluorescent detection of printed matters, insect attraction, and so on, the higher the transmittance at a wavelength of 325 nm, the more preferred it is.

In the $Li_2O$-$Al_2O_3$-$SiO_2$-based crystallized glass according to the present invention, the transmittance at a thickness of 3 mm and a wavelength of 350 nm is preferably 0% or more, 5% or more, 10% or more, 15% or more, 20% or more, 25% or more, 30% or more, 35% or more, 40% or more, 45% or more, 50% or more, 55% or more, 60% or more, 65% or more, 70% or more, 71% or more, 72% or more, 73% or more, 74% or more, 75% or more, 76% or more, 77% or more, 78% or more, 80% or more, 81% or more, 82% or more, or 83% or more, and particularly preferably 84% or more. Particularly, with use in applications for processing using a YAG laser or the like and so on, the higher the transmittance at a wavelength of 350 nm, the more preferred it is.

In the $Li_2O$-$Al_2O_3$-$SiO_2$-based crystallized glass according to the present invention, the transmittance at a thickness of 3 mm and a wavelength of 380 nm is preferably 50% or more, 55% or more, 60% or more, 65% or more, 70% or more, 75% or more, 78% or more, 80% or more, 81% or more, 82% or more, or 83% or more, and particularly preferably 84% or more. If the transmittance at a wavelength of 380 nm is too low, the yellow tint may be intensified and the transparency of the crystallized glass decreases, so that a desired transmission ability may not be able to be obtained.

In the $Li_2O$-$Al_2O_3$-$SiO_2$-based crystallized glass according to the present invention, the transmittance at a thickness of 3 mm and a wavelength of 800 nm is preferably 50% or more, 55% or more, 60% or more, 65% or more, 70% or more, 75% or more, 78% or more, 80% or more, 81% or more, 82% or more, 83% or more, 84% or more, 85% or more, 86% or more, or 87% or more, and particularly preferably 88% or more. If the transmittance at a wavelength of 800 nm is too low, the glass is likely to become greenish. Particularly, with use in medical applications, such as vein authentication, the higher the transmittance at a wavelength of 800 nm, the more preferred it is.

In the $Li_2O$-$Al_2O_3$-$SiO_2$-based crystallized glass according to the present invention, the transmittance at a thickness of 3 mm and a wavelength of 1200 nm is preferably 50% or more, 55% or more, 60% or more, 65% or more, 70% or more, 72% or more, 74% or more, 76% or more, 78% or more, 80% or more, 81% or more, 82% or more, 83% or more, 84% or more, 85% or more, 86% or more, 87% or more, or 88% or more, and particularly preferably 89% or more. If the transmittance at a wavelength of 1200 nm is too low, the glass is likely to become greenish. Particularly, with use in applications for infrared cameras, infrared communication, such as a remote controller, and so on, the higher the transmittance at a wavelength of 1200 nm, the more preferred it is.

In the $Li_2O$-$Al_2O_3$-$SiO_2$-based crystallized glass according to the present invention, the lightness L* at a thickness of 3 mm is preferably 50 or more, 60 or more, 65 or more, 70 or more, 75 or more, 80 or more, 85 or more, 90 or more, 91 or more, 92 or more, 93 or more, 94 or more, 95 or more, 96 or more, 96.1 or more, or 96.3 or more, and particularly preferably 96.5 or more. If the lightness L* is too small, the glass tends to become grayish and look dark regardless of the magnitude of chromaticity.

In the $Li_2O$-$Al_2O_3$-$SiO_2$-based crystallized glass according to the present invention, the chromaticity a* at a thickness of 3 mm is preferably within $\pm 5$, within $\pm 4.5$, within $\pm 4$, within $\pm 3.6$, within $\pm 3.2$, within $\pm 2.8$, within $\pm 2.4$, within $\pm 2$, within $\pm 1.8$, within $\pm 1.6$, within $\pm 1.4$, within $\pm 1.2$, within $\pm 1$, within $\pm 0.9$, within $\pm 0.8$, within $\pm 0.7$, or within $\pm 0.6$, and particularly preferably within $\pm 0.5$. If the chromaticity a* is too negatively large, the glass tends to look greenish. If the chromaticity a* is too positively large, the glass tends to look reddish.

In the $Li_2O$-$Al_2O_3$-$SiO_2$-based crystallized glass according to the present invention, the chromaticity b* at a thickness of 3 mm is preferably within $\pm 5$, within $\pm 4.5$, within $\pm 4$, within $\pm 3.6$, within $\pm 3.2$, within $\pm 2.8$, within $\pm 2.4$, within $\pm 2$, within $\pm 1.8$, within $\pm 1.6$, within $\pm 1.4$, within $\pm 1.2$, within $\pm 1$, within $\pm 0.9$, within $\pm 0.8$, within $\pm 0.7$, or within $\pm 0.6$, and particularly preferably within $\pm 0.5$. If the chromaticity b* is too negatively large, the glass tends to look blueish. If the chromaticity b* is too positively large, the glass tends to look yellowish.

In the $Li_2O$-$Al_2O_3$-$SiO_2$-based crystallized glass according to the present invention, the temperature at which the slope of the thermal expansion curve of glass changes is assumed to be the glass transition temperature. The glass transition point in a state before crystallization is preferably 680°C or more, 685°C or more, 690°C or more, 695°C or more, 700°C or more, 705°C or more, 710°C or more, 715°C or more, or 720°C or more, and particularly preferably 725°C or more. If the glass transition point is too low, the glass before crystallization is susceptible to breakage during forming into shape.

In the $Li_2O$-$Al_2O_3$-$SiO_2$-based crystallized glass according to the present invention, the annealing point (the glass temperature corresponding to a glass viscosity of approximately $10^{13}$ dPa·s) in a glass state before crystallization is preferably 680°C or more, 685°C or more, 690°C or more, 695°C or more, 700°C or more, 705°C or more, 710°C or more, 715°C or more, or 720°C or more, and particularly preferably 725°C or more. If the annealing point is too low, the glass before crystallization is susceptible to breakage during forming into shape.

In the $Li_2O$-$Al_2O_3$-$SiO_2$-based crystallized glass according to the present invention, the liquidus temperature is preferably 1540°C or less, 1535°C or less, 1530°C or less, 1525°C or less, 1520°C or less, 1515°C or less, 1510°C or less, 1505°C or less, 1500°C or less, 1495°C or less, 1490°C or less, 1485°C or less, 1480°C or less, 1475°C or less, 1470°C or less, 1465°C or less, 1460°C or less, 1455°C or less, 1450°C or less, 1445°C or less, 1440°C or less, 1435°C or less, 1430°C or less, 1425°C or less, 1420°C or less, or 1415°C or less, and particularly preferably 1410°C or less. If the liquidus temperature is too high, devitrification is likely to occur during production. On the other hand, when the liquidus temperature is 1480°C or less, the glass can be easily produced by a roll process or the like. When the liquidus temperature is 1450°C or less, the glass can be easily produced by a casting process or the like. When the liquidus temperature is 1410°C or less, the glass can be easily produced by a fusion process or the like.

In the $Li_2O$-$Al_2O_3$-$SiO_2$-based crystallized glass according to the present invention, the liquidus viscosity (the logarithmic value of the viscosity corresponding to the liquidus temperature) is 2.7 or more, 2.75 or more, 2.8 or more, 2.85 or more, 2.9 or more, 2.95 or more, 3 or more, 3.05 or more, 3.1 or more, 3.15 or more, 3.2 or more, 3.25 or more, 3.3 or more, 3.35 or more, 3.4 or more, 3.45 or more, 3.5 or more, 3.55 or more, 3.6 or more, or 3.65 or more, and particularly preferably 3.7 or more. If the liquidus viscosity is too low, devitrification is likely to occur during production. On the other hand, when the liquidus viscosity is 3.4 or more, the glass can be easily produced by a roll process or the like. When the liquidus viscosity is 3.5 or more, the glass can be easily produced by a casting process or the like. When the liquidus viscosity is 3.7 or more, the glass can be easily produced by a fusion process or the like.

In the $Li_2O$-$Al_2O_3$-$SiO_2$-based crystallized glass according to the present invention, a β-quartz solid solution is preferably precipitated as a major crystalline phase. When a β-quartz solid solution is precipitated as a major crystalline phase, its crystal grain size is likely to be small, so that the crystallized glass easily transmits visible light and the transparency is easily increased. In addition, the coefficient of thermal expansion of the glass can be easily approximated to zero. In the $Li_2O$-$Al_2O_3$-$SiO_2$-based crystallized glass according to the present invention, a β-spodumene solid solution is precipitated by subjecting glass to a heat treatment at a higher temperature than under a crystallization condition for precipitating a β-quartz solid solution. The crystal grain size of the β-spodumene solid solution is likely to be larger than that of the β-quartz solid solution and the β-spodumene solid solution generally tends to become clouded when produced into a crystallized glass. However, when the glass composition and the firing conditions are suitably adjusted, the difference in refractive index between the crystalline phase containing the β-spodumene solid solution and the remaining glass phase can be reduced, in which case the crystallized glass is less likely to become clouded. The $Li_2O$-$Al_2O_3$-$SiO_2$-based crystallized glass according to the present invention may contain crystals of a β-spodumene solid solution or the like in the absence of any adverse effect in terms of tinting and so on.

The $Li_2O$-$Al_2O_3$-$SiO_2$-based crystallized glass according to the present invention may further contain zirconia, zirconia titanate, a tin-containing zirconia-based oxide, titania, aluminotitanate, α-quartz, β-quartz, spodumene, zircon, cordierite, enstatite, mica, nepheline, anorthite, lithium disilicate, lithium metasilicate, wollastonite, diopside, cristobalite, tridymite, feldspar, spinel-based crystals, metal colloid, and/or so on.

The size of crystals described above is, in terms of the longest dimension of each crystal, preferably 100 μm or less, 50 μm or less, 30 μm or less, 10 μm or less, 5 μm or less, 4 μm or less, 3 μm or less, 2 μm or less, 1 μm or less, 0.5 μm or less, 0.3 μm or less, 0.2 μm or less, 0.1 μm or less, 50 nm or less, 45 nm or less, 40 nm or less, 35 nm or less, 30 nm or less, 25 nm or less, 20 nm or less, 15 nm or less, 10 nm or less, 8 nm or less, or 6 nm or less, and particularly preferably 5 nm or less. If the longest dimension is too long, light is likely to be scattered in the inside of the crystallized glass and, therefore, a desired transmittance is less likely to be achieved. The lower limit of the longest dimension of each crystal in the second and later phases is not particularly limited, but is actually not less than 0.01 nm.

The crystal system of crystals described above is preferably one of the hexagonal system, the trigonal system, the cubic system, the tetragonal system, the orthorhombic system, and the monoclinic system. Alternatively, the crystal system can be the triclinic system, in which case birefringence is likely to occur in the crystals and, as a result, the difference in refractive index from the remaining glass is likely to be large. Thus, light is likely to scatter in the crystals and a desired transmittance is less likely to be achieved. In the case of the triclinic system, the composition needs to be designed to make the refractive index difference between the crystal phase and the remaining glass phase small.

The difference in refractive index between the crystal phase and the remaining glass phase is, at each of nd (587.6 nm), nC (656.3 nm), nF (486.1 nm), ne (546.1 nm), ng (435.8 nm), nh (404.7 nm), ni (365.0 nm), nF' (480.0 nm), n785 (785 nm), n1310 (1310 nm), and n1550 (1550 nm) as representative wavelengths for measurement of refractive index, preferably within 1.5, within 1.4, within 1.3, within 1.2, within 1.1, within 1, within 0.9, within 0.8, within 0.7, within 0.6, within 0.5, within 0.4, within 0.3, within 0.2, within 0.1, within 0.09, within 0.08, within 0.07, within 0.06, within 0.05, within 0.04, within 0.03, within 0.02, within 0.01, within 0.009, within 0.008, within 0.007, within 0.006, within 0.005, within 0.004, within 0.003, within 0.002, within 0.001, within 0.0009, within 0.0008, within 0.0007, within 0.0006, within 0.0005, within 0.0004, within 0.0003, or within 0.0002, and particularly preferably within 0.0001. The refractive indices of glass and crystallized glass can be measured with a precision refractometer (KPR-2000 manufactured by Shimadzu Corporation) or so on.

In the $Li_2O$-$Al_2O_3$-$SiO_2$-based crystallized glass according to the present invention, the Young's modulus is preferably 60 to 120 GPa, 70 to 110 GPa, 75 to 110 GPa, 75 to 105 GPa, or 80 to 105 GPa, and particularly preferably 80 to 100 GPa. If the Young's modulus is too low or too high, the crystallized glass becomes susceptible to breakage.

In the $Li_2O$-$Al_2O_3$-$SiO_2$-based crystallized glass according to the present invention, the modulus of rigidity is preferably 25 to 50 GPa, 27 to 48 GPa, or 29 to 46 GPa, and particularly preferably 30 to 45 GPa. If the modulus of rigidity is too low or too high, the crystallized glass becomes susceptible to breakage.

In the $Li_2O$-$Al_2O_3$-$SiO_2$-based crystallized glass according to the present invention, the Poisson's ratio is preferably 0.35 or less, 0.32 or less, 0.3 or less, 0.28 or less, or 0.26 or less, and particularly preferably 0.25 or less. If the Poisson's ratio is too large, the crystallized glass becomes susceptible to breakage.

In relation to the $Li_2O$-$Al_2O_3$-$SiO_2$-based crystallized glass according to the present invention, the density of a crystallizable glass before crystallization is preferably 2.3 to 2.6 $g/cm^3$, 2.32 to 2.58 $g/cm^3$, 2.34 to 2.56 $g/cm^3$, 2.36 to 2.54 $g/cm^3$, 2.38 to 2.52 $g/cm^3$, or 2.39 to 2.51 $g/cm^3$, and particularly preferably 2.4 to 2.5 $g/cm^3$. If the density of the crystallizable glass is too small, the gas permeability of the glass before crystallization may deteriorate and, thus, the glass may be contaminated during storage. On the other hand, if the density of the crystallizable glass is too large, the weight per unit area of the glass becomes large and, therefore, the glass becomes difficult to handle.

In relation to the $Li_2O$-$Al_2O_3$-$SiO_2$-based crystallized glass (after crystallization) according to the present invention, the density of the crystallized glass is preferably 2.4 to 2.8 $g/cm^3$, 2.42 to 2.78 $g/cm^3$, 2.44 to 2.76 $g/cm^3$, or 2.46 to 2.74 $g/cm^3$, and particularly preferably 2.47 to 2.73 $g/cm^3$. If the density of the crystallized glass is too small, the gas permeability of the crystallized glass may deteriorate. On the other hand, if the density of the crystallized glass is too large, the weight per unit area of the glass becomes large and, therefore, the glass becomes difficult to handle. Furthermore, the density of the crystallized glass (after crystallization) provides an indicator for determining whether the glass is sufficiently crystallized. Specifically, it can be said that, as for the same type of glass, the larger the density (the larger the density difference between the source glass and the crystallized glass), the further the crystallization has progressed.

The rate of density change of the $Li_2O$-$Al_2O_3$-$SiO_2$-based crystallized glass according to the present invention is defined by {(((density ($g/cm^3$) after crystallization) - (density ($g/cm^3$) before crystallization)(density ($g/cm^3$) before crystallization)} $\times$ 100 (%), wherein the density before crystallization is the density after a melted glass is held at 700°C for 30 minutes and then cooled at 3°C/min to room temperature and the density after crystallization is the density after the glass is subjected to crystallization treatment under predetermined conditions. The rate of density change is preferably 0.01 to 10%, 0.05 to 8%, 0.1 to 8%, 0.3 to 8%, 0.5 to 8%, 0.9 to 8%, 1 to 7.8 %, 1 to 7.4 %, 1 to 7%, 1.2 to 7%, 1.6 to 7%, 2 to 7%, 2 to 6.8%, 2 to 6.5%, 2 to 6.3%, 2 to 6.2%, 2 to 6.1%, 2 to 6%, 2.5 to 5%, 2.6 to 4.5%, or 2.8 to 3.8%. By making the rate of density change between before and after crystallization small, the breakage rate after crystallization can be reduced, and scattering of the glass and glass matrix can also be reduced, so that a crystallized glass having a high transmittance can be obtained. Particularly, in reducing tinting factors other than the absorption of $TiO_2$ and so on in a region of $TiO_2$ contents of less than 0.5% (particularly 0.05% or less), the above small rate of density change enables significant reduction in scattering and can contribute to an increase in transmittance.

The $Li_2O$-$Al_2O_3$-$SiO_2$-based crystallized glass according to the present invention preferably has a flat surface of which the average surface roughness Ra is preferably 50 nm or less, 25 nm or less, 15 nm or less, 10 nm or less, 9 nm or less, 8 nm or less, 7 nm or less, 6 nm or less, 5 nm or less, 4 nm or less, 3 nm or less, or 2 nm or less, and particularly preferably 1 nm or less. If the surface roughness Ra of the flat surface is too large, light incident on the front and back surfaces of a sample from the outside is likely to be scattered and light is less likely to be emitted from the inside of the sample toward the outside, which makes it difficult to achieve a desired transmittancy. In addition, the sample becomes susceptible to breakage. On the other hand, if the surface roughness Ra of the flat surface is too small, the capacity of the flat surface of the sample becomes large and the attractive force between the flat surface of the sample and an object in contact with the sample becomes large, which may make it difficult to achieve a desired mold releasability and a desired electrical responsiveness. In view of the above circumstances, the surface roughness Ra of the flat surface of the $Li_2O$-$Al_2O_3$-$SiO_2$-based crystallized glass according to the present invention is preferably not less than 0.01 nm, not less than 0.03 nm, not less than 0.05 nm, not less than 0.07 nm, or not less than 0.09 nm, and particularly preferably not less than 0.1 nm.

The $Li_2O-Al_2O_3-SiO_2$-based crystallized glass according to the present invention preferably has an end surface of which the average surface roughness Ra is preferably 100 nm or less, 50 nm or less, 25 nm or less, 15 nm or less, 10 nm or less, 9 nm or less, 8 nm or less, 7 nm or less, 6 nm or less, 5 nm or less, 4 nm or less, 3 nm or less, or 2 nm or less, and particularly preferably 1 nm or less. If the surface roughness Ra of the end surface is too large, light is less likely to enter a sample through the end surface of the sample and light is less likely to be emitted from the inside of the sample toward the outside, which makes it difficult to achieve a desired transmittance. In addition, the sample becomes susceptible to breakage. On the other hand, if the surface roughness Ra of the end surface is too small, in physically holding the sample at the end surface thereof, the contact area between the sample and an holder becomes excessively small and the frictional resistance becomes small, which may make it difficult to hold the sample. In view of the above circumstances, the surface roughness Ra of the end surface of the $Li_2O-Al_2O_3-SiO_2$-based crystallized glass according to the present invention is preferably not less than 0.01 nm, not less than 0.03 nm, not less than 0.05 nm, not less than 0.07 nm, or not less than 0.09 nm, and particularly preferably not less than 0.1 nm.

The $Li_2O-Al_2O_3-SiO_2$-based crystallized glass according to the present invention preferably has a unpolished surface. The theoretical strength of glass is originally very high, but the glass is often broken even under a much lower stress than the theoretical strength. The reason for this is that tiny defects called Griffth flaws are produced in the surface of the $Li_2O-Al_2O_3-SiO_2$-based crystallized glass according to the present invention in processes after the forming of glass into shape, such as, for example, in a polishing process. Therefore, when the surface of the $Li_2O-Al_2O_3-SiO_2$-based crystallized glass according to the present invention is unpolished, the original mechanical strength is less likely to be impaired and, thus, the $Li_2O-Al_2O_3-SiO_2$-based crystallized glass according to the present invention is less likely to be broken. In addition, since the polishing process can be bypassed, the production cost of the $Li_2O-Al_2O_3-SiO_2$-based crystallized glass according to the present invention can be reduced. Furthermore, when the entire effective surfaces of both sides of the $Li_2O-Al_2O_3-SiO_2$-based crystallized glass according to the present invention are unpolished, the $Li_2O-Al_2O_3-SiO_2$-based crystallized glass can be even less likely to be broken. In order to make the entire effective surfaces unpolished surfaces, it is effective to make, at the time of forming into shape, surface portions corresponding to the effective surfaces free surfaces. Furthermore, even if the surface portions corresponding to the effective surfaces make contact with a solid member or the like at the time of forming into shape, the portions having made contact with the solid member or the like only have to be heated again at a temperature of the glass transition point or above after the forming into shape. Thus, smooth surfaces similar to free surfaces can be created.

The waviness of the $Li_2O-Al_2O_3-SiO_2$-based crystallized glass according to the present invention is preferably 10 μm or less, 5 μm or less, 4 μm or less, 3 μm or less, 2 μm or less, 1 μm or less, 0.8 μm or less, 0.7 μm or less, 0.6 μm or less, 0.5 μm or less, 0.4 μm or less, 0.3 μm or less, 0.2 μm or less, 0.1 μm or less, 0.08 μm or less, 0.05 μm or less, 0.03 μm or less, or 0.02 μm or less, and particularly preferably 0.01 μm or less. If the waviness is too large, a distribution of incident angles of light incident on the flat surface of a sample from a specific location is likely to be generated and the amount of light scattered on the sample surface becomes large on average, which makes it difficult to achieve a desired transmittance. The lower limit of the waviness is not particularly limited, but is actually not less than 0.01 nm.

The thickness of the $Li_2O-Al_2O_3-SiO_2$-based crystallized glass according to the present invention is preferably 10 mm or less, 9 mm or less, 8 mm or less, 7 mm or less, 6 mm or less, or 5 mm or less, and particularly preferably 4 mm or less. If the thickness of a sample is too large, the attenuation rate of light in the inside of the sample becomes large, which makes it difficult to achieve a desired transmittance. Furthermore, with the use of the $Li_2O-Al_2O_3-SiO_2$-based crystallized glass according to the present invention for a display, the thickness is preferably not more than 1000 μm and particularly preferably not more than 500 μm.

The difference between the maximum thickness and the minimum thickness of the $Li_2O-Al_2O_3-SiO_2$-based crystallized glass according to the present invention is preferably 50 μm or less, 25 μm or less, 10 μm or less, 5 μm or less, 1 μm or less, 500 nm or less, 300 nm or less, 100 nm or less, 50 nm or less, 25 nm or less, 15 nm or less, 10 nm or less, 9 nm or less, 8 nm or less, 7 nm or less, 6 nm or less, 5 nm or less, 4 nm or less, 3 nm or less, or 2 nm or less, and particularly preferably 1 nm or less. If the difference between the maximum thickness and the minimum thickness is too large, the angle of light when the light incident on the glass from a direction of one of the front and back surfaces thereof exits from the other surface departs from 90° to the light exit plane, which makes the light scatter more than desired and makes it likely that the surface looks dazzling.

The length of the $Li_2O-Al_2O_3-SiO_2$-based crystallized glass according to the present invention is preferably 10 mm or more, 30 mm or more, 50 mm or more, 70 mm or more, 90 mm or more, 100 mm or more, 200 mm or more, 300 mm or more, 400 mm or more, 500 mm or more, 600 mm or more, 800 mm or more, 1000 mm or more, 1200 mm or more, or 1500 mm or more, and particularly preferably 2000 mm or more. Thus, the $Li_2O-Al_2O_3-SiO_2$-based crystallized glass according to the present invention can be easily increased in size, leading to a reduction in production cost. On the other hand, if the length is too large, a sample is likely to produce waves or the like and bubbles and devitrified matters are highly likely to be mixed into the sample. Therefore, the length is preferably not more than 10000 mm, not more than 8000 mm, not more than 6000 mm, not more than 5000 mm, not more than 4000 mm, not more than 3500 mm, or not more than 3200 mm, and particularly preferably not more than 3000 mm.

The width of the $Li_2O$-$Al_2O_3$-$SiO_2$-based crystallized glass according to the present invention is not particularly limited so long as it is not more than the length thereof. However, when the $Li_2O$-$Al_2O_3$-$SiO_2$-based crystallized glass is processed into a reed-shaped glass laminate, the ratio of the length to the width is preferably 5 or more, 10 or more, 20 or more, 30 or more, 40 or more, 50 or more, or 60 or more, and particularly preferably 100 to 2000. If the ratio of the length to the width is too small, the production efficiency is likely to decrease.

Next, a description will be given of a method for producing a $Li_2O$-$Al_2O_3$-$SiO_2$-based crystallized glass according to the present invention.

First, a batch of raw materials prepared to provide a glass having the above-described composition is injected into a glass melting furnace, melted at 1400 to 1750°C, and then formed into shape, thus obtaining a crystallizable glass. In the forming into shape, it is preferred that a free surface of glass brought into contact only with an ambient gas and/or an ambient liquid is present.

The melting process is preferably one or a combination of two or more of a flame fusion process using a burner or the like, an electric melting process by electrical heating, a melting process using laser irradiation, a melting process using plasma, a solution phase synthesis, and a gas phase synthesis.

The forming process is preferably one or a combination of two or more of an overflow process, a float process, a down-draw process, a slot down process, a redraw process, a containerless process, a blow process, a press forming process, a roll process, a bushing process, and a tube draw process. Alternatively, the above process may be combined with reheating at a temperature of the glass transition point or above after the forming into shape. By doing so, a $Li_2O$-$Al_2O_3$-$SiO_2$-based crystallized glass according to the present invention having a good surface quality can be produced. To explain with reference to an overflow process, the reason for the above is that a plane of molten glass to be the front surface of a $Li_2O$-$Al_2O_3$-$SiO_2$-based crystallized glass according to the present invention does not make contact with a gutter-shaped refractory and is formed, in a free-surface state, into shape. The overflow process is a process for producing a $Li_2O$-$Al_2O_3$-$SiO_2$-based crystallized glass according to the present invention by overflowing molten glass from both lateral sides of a heat-resistant gutter-shaped structure and allowing the overflowed molten glass to converge at the bottom end of the gutter-shaped structure and concurrently drawing it downward. The structure and material of the gutter-shaped structure are not particularly limited so long as they can bring the dimensions and surface accuracy of the $Li_2O$-$Al_2O_3$-$SiO_2$-based crystallized glass according to the present invention into desired conditions to achieve a quality that can be employed for the $Li_2O$-$Al_2O_3$-$SiO_2$-based crystallized glass according to the present invention. Furthermore, a force may be applied to the molten glass by any method in order to implement the downward drawing. For example, a method of drawing molten glass by rotating a heat-resistant roll having a sufficiently large width while bringing it into contact with the glass or a method of drawing molten glass while bringing a plurality of pairs of heat-resistant rolls into contact only with the neighborhood of the end surface of the glass may be adopted.

Next, the obtained crystallizable glass (a glass that is not yet crystallized and crystallizable) is subjected to heat treatment and thus crystallized. The crystallization conditions are as follows: nucleation is first performed at 650 to 1000°C (preferably 750 to 900°C) for 0.1 to 100 hours (preferably 1 to 60 hours) and crystal growth is then performed at 800 to 1050°C (preferably 800 to 1000°C) for 0.1 to 50 hours (preferably 0.2 to 10 hours). Thus, a $Li_2O$-$Al_2O_3$-$SiO_2$-based crystallized glass with β-quartz solid solution crystals and so on precipitated therein can be obtained. The heat treatment may be performed at a specific temperature only, may be performed stepwise by holding the glass in two or more temperature levels or may be performed by the application of heat with a temperature gradient.

Furthermore, the crystallization may be promoted by applying sonic waves or electromagnetic waves to the glass. Moreover, the cooling of the crystallized glass in a high-temperature state may be performed at a cooling rate with a specific temperature gradient or in two or more levels of temperature gradients. In order to obtain a sufficient thermal shock resistance, it is desirable to control the cooling rate to sufficiently structurally relax the remaining glass phase. The average cooling rate from 800°C to 25°C is, in an innermost portion of the crystallized glass thickness farthest from the surface, preferably 3000°C/min, 1000°C/min or less, 500°C/min or less, 400°C/min or less, 300°C/min or less, 200°C/min or less, 100°C/min or less, 50°C/min or less, 25°C/min or less, or 10°C/min or less, and particularly preferably 5°C/min or less. In order to obtain dimensional stability over a long period, the above average cooling rate is preferably 2.5°C/min or less, 1°C/min or less, 0.5°C/min or less, 0.1°C/min or less, 0.05°C/min or less, 0.01°C/min or less, 0.005°C/min or less, 0.001°C/min or less, or 0.0005°C/min or less, and particularly preferably 0.0001°C/min or less. Except for the case where physical strengthening treatment by air cooing, water cooling or the like is performed, the cooling rate of the crystallized glass at the glass surface and the cooling rate thereof in the innermost portion farthest from the glass surface preferably approximate to each other. The value of the cooling rate in the innermost portion farthest from the surface divided by the cooling rate at the surface is preferably 0.0001 to 1, 0.001 to 1, 0.01 to 1, 0.1 to 1, 0.5 to 1, 0.8 to 1, or 0.9 to 1, and particularly preferably 1. As the above value is closer to 1, residual strain is less likely to occur in all locations of the crystallized glass sample and long-term dimensional stability is more likely to be obtained. The cooling rate at the surface can be estimated by contact thermometry or with a radiation thermometer, while the temperature of the inner portions can be determined by placing the crystallized glass in a high-temperature state into a cooling medium, measuring the heat quantity and rate of heat quantity change of the cooling medium, and making an estimate from the numeric measurement data, the respective specific heats of the crystallized glass and the cooling medium, the thermal conductivity, and so on.

The $Li_2O$-$Al_2O_3$-$SiO_2$-based crystallized glass according to the present invention may be subjected to chemical strengthening or other treatments. In relation to the treatment conditions for chemical strengthening treatment, the treatment time and treatment temperature are sufficient to be appropriately selected in consideration of the glass composition, the volume fraction of each phase, the type of molten salt, and so on. For example, for the purpose of facilitating chemical strengthening, a glass composition containing a large amount of $Na_2O$, which is likely to be contained in the remaining glass, may be selected. Furthermore, as to the molten salt, monovalent cations of Li, Na, K, and so on or divalent cations of Mg, Ca, Sr, Ba, Zn, and so on may be contained singly or in combination. Moreover, aside from an ordinary single-step strengthening process, a multistep chemical strengthening process may be selected. The molten salt that can be used is a nitrate (such as potassium nitrate, sodium nitrate or lithium nitrate), a carbonate (such as potassium carbonate, sodium carbonate or lithium carbonate), a sulfate (such as potassium sulfate, sodium sulfate or lithium sulfate), a chloride salt (such as potassium chloride, sodium chloride or lithium chloride) or any combination of them. Among them, a nitrate or so on having a low melting point is preferably used as the molten salt and sodium nitrate is particularly preferably used. The temperature for ion exchange is preferably 330 to 550°C, more preferably 350 to 500°C, and particularly preferably 390 to 450°C, and the time for ion exchange is preferably 30 minutes to 12 hours, 45 minutes to 10 hours, 1 hour to 8 hours, or 1 hour to 6 hours, and particularly preferably 1 hour to 4 hours. The above-described conditions for strengthening may be arbitrarily changed depending on the application or strength required.

In giving a compressive stress to the $Li_2O$-$Al_2O_3$-$SiO_2$-based crystallized glass according to the present invention by chemical strengthening or other treatments, the compressive stress value (CS) is preferably 50 MPa or more, 70 MPa or more, 80 MPa or more, 90 MPa or more, 100 MPa or more, 120 MPa or more, 150 MPa or more, 180 MPa or more, 200 MPa or more, 230 MPa or more, 250 MPa or more, 260 MPa or more, or 280 MPa or more, and particularly preferably 300 MPa or more. If the compressive stress value is too small, the Vickers hardness and the bending strength may be low.

In giving a compressive stress to the $Li_2O$-$Al_2O_3$-$SiO_2$-based crystallized glass according to the present invention by chemical strengthening or other treatments, the depth of compressive stress (DOC) is preferably 10 μm or more, 20 μm or more, 30 μm or more, 40 μm or more, 50 μm or more, 60 μm or more, 70 μm or more, 80 μm or more, 90 μm or more, 100 μm or more, or 110 μm or more, and particularly preferably 120 μm or more. If the depth of compressive stress is too small, the critical drop height may be low. The compressive stress value (CS) and the depth of compressive stress (DOC) can be measured with a scattered light photoelastic stress meter SLP-1000 (manufactured by Orihara Industrial Co., Ltd.) and a surface stress meter FSM-6000 (manufactured by Orihara Industrial Co., Ltd.) .

In the $Li_2O$-$Al_2O_3$-$SiO_2$-based crystallized glass according to the present invention, the abraded four-point bending strength is preferably 150 MPa or more, 160 MPa or more, 165 MPa or more, 170 MPa or more, 180 MPa or more, 190 MPa or more, 210 MPa or more, 220 MPa or more, 230 MPa or more, 235 MPa or more, 240 MPa or more, or 245 MPa or more, and particularly preferably 250 MPa or more. If the abraded four-point bending strength is too low, the $Li_2O$-$Al_2O_3$-$SiO_2$-based crystallized glass is susceptible to breakage upon dropping when used as a smartphone cover glass or the like. The upper limit of the abraded four-point bending strength is not particularly limited, but is actually not more than 1500 MPa. The abraded four-point bending strength can be measured in the following manner. First, a glass sheet processed with a length of 50 mm, a width of 50 mm, and a thickness of 0.6 mm is erected and fixed, in this state, to a 1.5 mm thick SUS sheet. The tip of a pendulum arm is allowed to hit the glass sheet through a P180 sand paper, thus abrading the glass sheet. The arm tip is formed of a 5 mm diameter iron cylinder and the weight of the arm is 550 g. The height from which the arm is swung down is set at 5 mm from the hitting point.

The $Li_2O$-$Al_2O_3$-$SiO_2$-based crystallized glass obtained in the manner as described so far may be cut. For example, in cutting with a wire saw, cutting is preferably performed along with the supply of a slurry containing polishing grains to the wire saw. Furthermore, the $Li_2O$-$Al_2O_3$-$SiO_2$-based crystallized glass according to the present invention may be cut by the wire saw controlled at an angle of 45° or less, 30° or less, 20° or less, 10° or less, 5 ° or less, 3° or less, or particularly 1° or less to the surface of the $Li_2O$-$Al_2O_3$-$SiO_2$-based crystallized glass. Moreover, the $Li_2O$-$Al_2O_3$-$SiO_2$-based crystallized glass according to the present invention may be cut with something adhering thereto, cut into parallel pieces or cut into non-parallel pieces.

The wire width of the wire saw is preferably 500 μm or less, more preferably 300 μm or less, even more preferably 200 μm or less, and particularly preferably 10 to 100 μm. If the wire width of the wire saw is too large, the yield of reed-shaped pieces of glass is likely to decrease. If the wire width of the wire saw is too small, the wire may be broken during cutting.

In cutting with a wire saw, in order to settle metal contained in the slurry after the cutting and recover it, a slurry circulation apparatus is preferably installed and a metal settling tank is preferably further installed along with the slurry circulation apparatus. If metal is mixed into the slurry, the cutting efficiency is likely to decrease.

Effects due to the cutting are not particularly limited to the wire saw and can be obtained likewise by other methods, such as thermal splitting or bend splitting. These methods can be applied to the $Li_2O$-$Al_2O_3$-$SiO_2$-based crystallized glass according to the present invention.

[Examples]

Hereinafter, the present invention will be described with reference to examples, but the present invention is not limited to the following examples. Tables 1 and 2 show examples (Samples Nos. 1 to 6) of the present invention.

[Table 1]

|  |  | No.1 | No.2 | No.3 | No.4 | No.5 | No.6 |
|---|---|---|---|---|---|---|---|
| $SiO_2$ | % by mass | 66.8 | 67.1 | 66.4 | 67.3 | 68.2 | 67.9 |
| $Al_2O_3$ | | 22.8 | 22.8 | 22.8 | 22.8 | 20.9 | 20.8 |
| $Li_2O$ | | 2.70 | 2.45 | 3.44 | 2.70 | 3.62 | 3.60 |
| $Na_2O$ | | 0.045 | 0.045 | 0.045 | 0.045 | 0.68 | 0.68 |
| $K_2O$ | | 0.009 | 0.009 | 0.009 | 0.05 | 0.001 | 0.001 |
| MgO | | 1.67 | 1.92 | 0.93 | 0.07 | 1.31 | 1.05 |
| CaO | | 0.048 | 0.048 | 0.048 | 0.05 | 0.07 | 0.10 |
| SrO | | 0.001 | 0.001 | 0.001 | 0.05 | 0.05 | 0.10 |
| BaO | | 0.009 | 0.009 | 0.009 | 0.05 | 0.03 | 0.10 |
| ZnO | | 0.001 | - | - | 1.60 | 0.66 | 1.31 |
| $SnO_2$ | | 0.28 | 0.15 | 0.38 | 0.25 | 1.19 | 1.18 |
| $ZrO_2$ | | 2.23 | 2.15 | 2.04 | 2.38 | 2.72 | 2.70 |
| $HfO_2$ | | 0.038 | 0.037 | 0.035 | 0.0001 | 0.047 | 0.046 |
| $TiO_2$ | | 1.97 | 1.97 | 2.35 | 1.81 | 0.020 | 0.018 |
| $P_2O_5$ | | 1.41 | 1.31 | 1.48 | 0.80 | 0.42 | 0.42 |
| $Fe_2O_3$ | | 0.010 | 0.007 | 0.015 | 0.003 | 0.013 | 0.015 |
| Pt | ppm | 1.5 | 0.05 | 0.01 | 0.73 | 0.01 | 0.02 |
| Rh | | 1.2 | 0.05 | 0.03 | 0.82 | 0.02 | 0.04 |
| $MoO_3$ | | 0.5 | 1.5 | 30 | 10.0 | 0.0001 | 0.0003 |
| Na+K | % by mass | 0.05 | 0.05 | 0.05 | 0.10 | 0.68 | 0.68 |
| Ca+Sr+Ba | | 0.06 | 0.06 | 0.06 | 0.15 | 0.15 | 0.30 |
| Mg+Zn | | 1.67 | 1.92 | 0.93 | 1.67 | 1.97 | 2.36 |

[Table 2]

|  |  | No.1 | No.2 | No.3 | No.4 | No.5 | No.6 |
|---|---|---|---|---|---|---|---|
| | | Before Crystallization | | | | | |
| $\beta$-OH | /mm | 0.37 | 0.28 | 0.46 | 0.13 0.40 | | 0.38 |
| Density | g/cm$^3$ | 2.425 | - | - | - | 2.435 | 2.448 |
| CTE at 30-380°C | $\times 10^{-7}$/°C | 31.5 | - | - | - | - | - |

(continued)

|  |  | No.1 | No.2 | No.3 | No.4 | No.5 | No.6 |
|---|---|---|---|---|---|---|---|
| Before Crystallization | | | | | | | |
| CTE at 30-750°C | $\times 10^{-7}/$°C | 41.1 | - | - | - | - | - |
| Glass Transition Point | °C | 727 | - | - | - | - | - |
| $10^4$ dPa temperature | °C | 1351 | - | - | - | 1355 | 1344 |
| $10^3$ dPa temperature | °C | 1529 | - | - | - | 1541 | 1529 |
| $10^{2.5}$ dPa temperature | °C | 1642 | - | - | - | 1657 | 1645 |
| Liquidus Temperature | °C | 1370 | - | - | - | - | - |
| Liquidus Viscosity(Log dPa) | - | 3.75 | - | - | - | - | - |
| After Crystallization | | | | | | | |
| Crystallization Conditions |  | 765°C-3h →890°C-1h | 765°C-3h →890°C-1h | 765°C-3h →890°C-1h | 765°C-3h →890°C-1h | 765°C-3h →890°C-1h | 765°C-3h →890°C-1h |
| Density | g/cm$^3$ | - | - | - | - | 2.52 | 2.527 |
| Precipitated Crystals 1 | - | ZrTiO$_4$, $\beta$-Q.s.s | ZrTiO$_4$, $\beta$-Q.s.s. | ZrTiO$_4$, $\beta$-Q.s.s. | ZrTiO$_4$, $\beta$-Q.s.s. | ZrO$_2$, $\beta$-Q.s.s. | ZrO$_2$, $\beta$-Q.s.s. $\beta$-Spo.s.s. |
| Average Crystallite Size | nm | 5 | 3 | 7 | 10 | 3 | 4 |
| Precipitated Crystals 2 | - | $\beta$-Q.s.s. | $\beta$-Q.s.s. | $\beta$-Q.s.s. | $\beta$-Q.s.s. | $\beta$-Q.s.s. | $\beta$-Q.s.s. |
| Average Crystallite Size | nm | 25 | 30 | 45 | 40 | 35 | 45 |
| Precipitated Crystals 3 | - | - | - | - | - | - | $\beta$-Spo.s.s. |
| Average Crystallite Size | nm | - | - | - | - | - | 15 |
| CTE at 30-380°C | $\times 10^{-7}/$°C | 6.6 | 11.1 | 0.3 | -0.4 | 0.5 | -0.4 |
| CTE at 30-750°C | $\times 10^{-7}/$°C | 6.2 | 10.6 | 1.5 | -3.0 | 1.7 | 0.9 |
| Young's Modulus | Gpa | 92 | - | - | - | - | - |

(continued)

| After Crystallization | | | | | | | |
|---|---|---|---|---|---|---|---|
| Modulus of Rigidity | GPa | 37 | - | - | - | - | - |
| Poisson's Ratio | - | 0.23 | - | - | - | - | - |
| 3 mm/200 nm Transmittance | % | - | - | - | - | 42.6 | 40.6 |
| 3 mm/250 nm Transmittance | % | - | - | - | - | 16.8 | 14.9 |
| 3 mm/300 nm Transmittance | % | - | - | - | - | 14.9 | 11.1 |
| 3 mm/325 nm Transmittance | % | - | - | - | - | 52.5 | 45.0 |
| 3 mm/350 nm Transmittance | % | - | - | - | - | 75.6 | 71.8 |
| 3 mm/380 nm Transmittance | % | - | - | - | - | 84.6 | 83.1 |
| 3 mm/800 nm Transmittance | % | - | - | - | - | 91.0 | 91.0 |
| 3 mm/1200 nm Transmittance | % | - | - | - | - | 90.8 | 90.8 |
| 3mm L* | % | - | - | - | - | 96.0 | 95.9 |
| 3mm a* | % | - | - | - | - | -0.1 | -0.1 |
| 3mm b* | % | - | - | - | - | 1.1 | 1.3 |

First, raw materials were formulated in the form of an oxide, a hydroxide, a carbonate, a nitrate or other forms so that each of glasses having respective compositions shown in the table was obtained, thus obtaining a glass batch (where the compositions shown in the table are analysis values of actually produced glasses). The obtained glass batch was put into a crucible containing platinum and rhodium, a rhodium-free strengthened-platinum crucible, a refractory crucible or a quartz crucible, melted therein at 1600°C for 4 to 100 hours, then melted at an increased temperature of 1650 to 1680°C for 0.5 to 20 hours, formed with a thickness of 5 mm by roll forming, and subjected to heat treatment at 700°C for 30 minutes using a slow-cooling furnace, and then the slow-cooling furnace was cooled at a rate of 100°C/h to room temperature, thus obtaining a crystallizable glass. The melting was performed by the electric melting process widely used for the development of glass materials.

The respective contents of Pt and Rh in the samples were analyzed with an ICP-MS instrument (Agilent 8800 manufactured by Agilent Technologies, Inc.). First, the produced glass sample was ground and wetted with pure water and, then, perchloric acid, nitric acid, sulfuric acid, hydrofluoric acid or the like was added to the glass sample to fuse the glass sample with the acid. Thereafter, the respective contents of Pt and Rh in the sample were measured with ICP-MS. Based on calibration curves made using prepared Pt and Rh solutions the concentrations of which had been known, the respective contents of Pt and Rh in each measurement sample were determined. The measurement modes were a He gas/HMI (low mode) for Pt and a HEHe gas/HMI (middle mode) for Rh. The mass numbers were 198 for Pt and 103 for Rh. The content of $Li_2O$ in the produced samples was analyzed with an atomic absorption spectrometer (contrAA 600 manufactured by Analytik Jena). The manner of the analysis for this component was fundamentally the same as the analysis for Pt and Rh, such as the flow of fusion of the glass sample and the use of the calibration curve. With respect to the other components, the content of each component was measured with ICP-MS or atomic absorption spectrometry, like Pt, Rh, and $Li_2O$, or otherwise a calibration curve was made with an XRF analyzer (ZSX Primus IV manufactured by Rigaku Corporation) using as a sample for determining the calibration curve a glass sample the concentration of which had been known by previously examining it with an ICP-MS or atomic absorption spectrometer and the actual content of the component was determined from an XRF analysis value of the measurement sample based on the calibration curve. In doing XRF analysis, the tube voltage, the tube current, the exposure time, and so on were adjusted according to the analytical component as needed.

Each of the crystallizable glasses shown in the tables was subjected to heat treatment under conditions shown in the tables and thus crystallized. Thereafter, the glass was subjected to heat treatment at 700°C for 30 minutes and then cooled to room temperature at 100°C/h. The obtained crystallized glasses were evaluated in terms of density, type of precipitated crystals, average crystallite size, coefficient of thermal expansion, Young's modulus, modulus of rigidity, Poisson's ratio, transmittance, lightness, and chromaticity. In addition, the crystallizable glasses before crystallization were measured in terms of β-OH value, density, coefficient of thermal expansion, glass transition point, high-temperature viscosity, liquidus temperature, and liquidus viscosity.

The density was evaluated by the Archimedes's method.

The precipitated crystals were evaluated with an X-ray diffractometer (an automated multipurpose horizontal X-ray diffractometer SmartLab manufactured by Rigaku corporation). The scan mode was $2\theta/\theta$ measurement, the scan type was a continuous scan, the scattering and divergent slit width was 1°, the light-receiving slit width was 0.2°, the measurement range was 10 to 60°, the measurement step was 0.1°, and the scan speed was 5°/min. The type of major crystalline phase and the crystal grain size were evaluated using analysis software installed on the instrument package. A β-quartz solid solution, a β-spodumene solid solution, zirconia titanate, and zirconia, each of which is the type of precipitated crystals identified as a major crystalline phase, are shown as "β-Q.s.s.", "β-Spo.s.s.", "$ZrTiO_4$", and "$ZrO_2$", respectively, in the table. The average crystallite size was calculated using a measured X-ray diffraction peak based on the Debeye-Sherrer method. In the measurement for calculating the average crystallite size, the scan speed was set at 1°/min.

The coefficient of thermal expansion was evaluated, using a sample processed with a length of 20 mm and a diameter of 3.8 mm, from its average coefficients of linear thermal expansion measured in a temperature range of 30 to 380°C and a temperature range of 30 to 750°C. A dilatometer manufactured by NETZSCH was used for the measurement. Furthermore, each crystallizable glass before crystallization was evaluated in terms of glass transition point by measuring the thermal expansion curve in a temperature range of 30 to 750°C with the same measurement instrument and calculating the inflection point of the curve.

The Young's modulus, the modulus of rigidity, and the Poisson's ratio were measured, using a plate-like sample (40 mm × 20 mm × 20 mm) surface-polished with a polishing solution containing 1200 mesh alumina powder dispersed therein, with a free resonance elastic modulus measurement device (JE-RT3 manufactured by Nihon Techno-Plus Corporation) in a room temperature environment.

The transmittance, the lightness, and the chromaticity were evaluated by measuring a crystallized glass sheet optically polished on both sides to have a thickness of 3 mm with a spectro-photometer. A spectro-photometer V-670 manufactured by JASCO Corporation was used for the measurement. The spectro-photometer V-670 was fitted with an integrating sphere unit "ISN-723" and, therefore, the measured transmittance corresponds to the total transmittance. Furthermore, the measurement wavelength range was 200 to 1500 nm, the scan speed was 200 nm/min, the sampling pitch was 1 nm, and the band widths were 5 nm in a wavelength range of 200 to 800 nm and 20 nm in the other wavelength range. Prior to the measurement, a baseline correction (adjustment to 100%) and a dark measurement (adjustment to 0%) were performed. The dark measurement was conducted in a state where a barium sulfate plate attached to ISN-723 was removed. Using the measured transmittance, tristimulus values X, Y, and Z were calculated based on JIS Z 8781-4:2013 and its corresponding International Standard. The lightness and chromaticity were calculated from each stimulus value (light source C/10°).

The β-OH value was determined by measuring the transmittance of glass with FT-IR Frontier (manufactured by PerkinElmer Inc.) and using the following equation. The scan speed was 100 μm/min, the sampling pitch was 1 cm⁻¹, and the scan times were ten per measurement.

$$\beta\text{-OH value} = (1/X)\log10(T_1/T_2)$$

X: glass thickness (mm)
$T_1$: transmittance (%) at a reference wavelength of 3846 cm⁻¹
$T_2$: minimum transmittance (%) at a hydroxyl group absorption wavelength of around 3600 cm⁻¹

The high-temperature viscosity was evaluated by the platinum ball pulling-up method. In making the evaluation, a mass of glass sample was crushed to an appropriate size and loaded into an alumina-made crucible so as not to entrain air bubbles as much as possible. Subsequently, the alumina crucible was heated to turn the sample into a melt, the measured values of the glass viscosity at a plurality of temperatures were determined, the constant of the Vogel-Fulcher equation was calculated, a viscosity curve was created, and the temperature at each viscosity was calculated from the viscosity curve.

The liquidus temperature was evaluated in the following manner. First, glass powder sized between 300 micrometers and 500 micrometers was filled in a platinum boat with approximately 120 × 20 × 10 mm, the boat was put into an electric furnace, and the glass powder was melted at 1600°C for 30 minutes in the furnace. Thereafter, the boat was moved into an electric furnace having a linear temperature gradient and placed therein for 20 hours to precipitate devitrification. The measurement sample was air cooled to room temperature, the devitrification precipitated at the interface between the platinum boat and the glass was observed, and the temperature at the portion where the devitrification was precipitated was calculated as a liquidus temperature from the temperature gradient graph of the electric furnace. Furthermore, the obtained liquidus temperature was interpolated into the high-temperature viscosity curve of the glass and the viscosity in the viscosity curve corresponding to the liquidus temperature was determined as a liquidus viscosity. The primary phases of the glasses shown in the table have been found to be mainly $ZrO_2$ from the results of X-ray diffraction, composition analysis, and so on (with a scanning electron microscope S-3400N Type II manufactured by Hitachi High-Tech Corporation and EMAX ENERGY EX-250X manufactured by Horiba, Ltd.) .

As is obvious from the tables, each of Samples Nos. 1 to 6, which are working examples, had a low thermal expansibility and a high transmittancy in spite of a small content of $Li_2O$.

[Industrial Applicability]

The $Li_2O$-$Al_2O_3$-$SiO_2$-based crystallized glass according to the present invention is suitable as a material for front windows of oil stoves, wood stoves and the like, substrates for high-technology products, such as color filter substrates and image sensor substrates, setters for firing electronic components, light diffuser plates, furnace core tubes for producing semiconductors, masks for producing semiconductors, optical lenses, dimension measurement members, communication members, construction members, chemical reaction containers, electromagnetic cooker top plates, heat-resistant plates and utensils, heat-resistant covers, fire door windows, members for astrometric telescopes, members for space optics, coloring materials, light absorbers, temperature regulating materials, humidity regulating materials, sound insulators, dielectric members, coefficient-of-linear-thermal-expansion adjusting materials, battery members, members for increasing the strength of resin or other materials, display members, members for chemical strengthening, and so on. The application of the $Li_2O$-$Al_2O_3$-$SiO_2$-based crystallized glass according to the present invention is not particularly limited to the above. Furthermore, the $Li_2O$-$Al_2O_3$-$SiO_2$-based crystallized glass according to the present invention may be used in only one of the above applications or in a combination of them.

**Claims**

1. A $Li_2O$-$Al_2O_3$-$SiO_2$-based crystallized glass containing, in terms of % by mass, 60 to 80% $SiO_2$, 15 to 30% $Al_2O_3$, 2.45 to 3. 64% $Li_2O$, 0 to less than 0.7% $Na_2O$+$K_2O$, more than 0% to less than 1% CaO+SrO+BaO, and 0 to 2.4% MgO+ZnO.

2. The $Li_2O$-$Al_2O_3$-$SiO_2$-based crystallized glass according to claim 1, containing, in terms of % by mass, more than 0% $HfO_2$.

3. The $Li_2O$-$Al_2O_3$-$SiO_2$-based crystallized glass according to claim 1 or 2, containing, in terms of % by mass, more than 0% $MoO_3$.

4. The $Li_2O$-$Al_2O_3$-$SiO_2$-based crystallized glass according to any one of claims 1 to 3, containing, in terms of % by mass, 30 ppm or less Pt and 30 ppm or less Rh.

5. The $Li_2O$-$Al_2O_3$-$SiO_2$-based crystallized glass according to any one of claims 1 to 4, having a $\beta$-OH value of 2/mm or less.

6. The $Li_2O$-$Al_2O_3$-$SiO_2$-based crystallized glass according to any one of claims 1 to 5, containing, in terms of % by mass, 2 to 4% $ZrO_2$ and 0 to 1.24% $SnO_2$.

7. The $Li_2O$-$Al_2O_3$-$SiO_2$-based crystallized glass according to any one of claims 1 to 6, containing, in terms of % by mass, 0.42 to 5% $P_2O_5$.

8. The $Li_2O$-$Al_2O_3$-$SiO_2$-based crystallized glass according to any one of claims 1 to 7, having a coefficient of thermal expansion of -15 to 15 × $10^{-7}$/°C at 30 to 750°C.

## INTERNATIONAL SEARCH REPORT

| | International application No. |
|---|---|
| | **PCT/JP2022/035916** |

### A. CLASSIFICATION OF SUBJECT MATTER

*C03C 10/12*(2006.01)i
FI: C03C10/12

According to International Patent Classification (IPC) or to both national classification and IPC

### B. FIELDS SEARCHED

Minimum documentation searched (classification system followed by classification symbols)

C03C1/00-14/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

INTERGLAD

### C. DOCUMENTS CONSIDERED TO BE RELEVANT

| Category* | Citation of document, with indication, where appropriate, of the relevant passages | Relevant to claim No. |
|---|---|---|
| X | WO 2020/196171 A1 (NIPPON ELECTRIC GLASS CO., LTD.) 01 October 2020 (2020-10-01) claims, paragraphs [0073], [0095], examples | 1-8 |
| X | WO 2020/217792 A1 (NIPPON ELECTRIC GLASS CO., LTD.) 29 October 2020 (2020-10-29) claims, paragraphs [0041], [0071], [0080], examples | 1-8 |
| X | JP 2012-51786 A (SCHOTT AG) 15 March 2012 (2012-03-15) claims, paragraphs [0016], [0024], examples | 1, 3-6, 8 |
| X | JP 2012-528064 A (EUROKERA) 12 November 2012 (2012-11-12) example A | 1, 4-5, 8 |

☐ Further documents are listed in the continuation of Box C.    ☑ See patent family annex.

| | |
|---|---|
| \*    Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **18 November 2022** | **06 December 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

INTERNATIONAL SEARCH REPORT
Information on patent family members

International application No.

**PCT/JP2022/035916**

| Patent document cited in search report | | | Publication date (day/month/year) | Patent family member(s) | | | Publication date (day/month/year) |
|---|---|---|---|---|---|---|---|
| WO | 2020/196171 | A1 | 01 October 2020 | EP | 3943460 | A1 | |
| | | | | claims, paragraphs [0073], [0095],example 8 | | | |
| | | | | US | 2022/0033298 | A1 | |
| | | | | CN | 113423671 | A | |
| | | | | KR | 10-2021-0138555 | A | |
| WO | 2020/217792 | A1 | 29 October 2020 | EP | 3960716 | A1 | |
| | | | | claims, paragraphs [0041], [0071], [0080], examples | | | |
| | | | | US | 2022/0081348 | A1 | |
| | | | | CN | 113710625 | A | |
| | | | | KR | 10-2021-0153593 | A | |
| JP | 2012-51786 | A | 15 March 2012 | DE | 102011107831 | A1 | |
| | | | | FR | 2964378 | A1 | |
| JP | 2012-528064 | A | 12 November 2012 | WO | 2010/137000 | A2 | |
| | | | | example A | | | |
| | | | | US | 2010/0304948 | A1 | |
| | | | | FR | 2946041 | A1 | |
| | | | | CN | 102448903 | A | |
| | | | | KR | 10-2012-0069615 | A | |

Form PCT/ISA/210 (patent family annex) (January 2015)

**EP 4 455 103 A1**

**REFERENCES CITED IN THE DESCRIPTION**

**Patent documents cited in the description**

- JP S3921049 B
- JP S4020182 B
- JP H01308845 A